(19) Europäisches Patentamt / European Patent Office / Office européen des brevets

(11) **EP 3 845 404 B1**

(12) **FASCICULE DE BREVET EUROPEEN**

(45) Date de publication et mention de la délivrance du brevet:
**10.08.2022 Bulletin 2022/32**

(21) Numéro de dépôt: **21150285.1**

(22) Date de dépôt: **05.01.2021**

(51) Classification Internationale des Brevets (IPC):
**B60H 3/06** *(2006.01)*

(52) Classification Coopérative des Brevets (CPC):
**B60H 3/0608;** B60H 2003/0683

(54) **PROCEDE ET EQUIPEMENT DE CONTROLE DE L'ETAT D'UN FILTRE A AIR D'HABITACLE DE VEHICULE, PAR DETERMINATION D'UN EFFET BARRIERE AUX PARTICULES FINES**

VERFAHREN UND ANLAGE ZUR ÜBERWACHUNG DES ZUSTANDS EINES FAHRZEUGINNENRAUMFILTERS DURCH BESTIMMUNG EINER SPERRWIRKUNG GEGEN FEINPARTIKEL

METHOD AND DEVICE FOR CONTROLLING THE CONDITION OF AN AIR FILTER OF A PASSENGER COMPARTMENT OF A VEHICLE, BY DETERMINING A BARRIER EFFECT AGAINST FINE PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2020 FR 2000070**

(43) Date de publication de la demande:
**07.07.2021 Bulletin 2021/27**

(73) Titulaire: **SOGEFI FILTRATION**
**78280 Guyancourt (FR)**

(72) Inventeurs:
• **GAUTHE, Grégory**
**95530 LA FRETTE SUR SEINE (FR)**
• **DEBARD, Laurent**
**83330 LE BEAUSSET (FR)**
• **DUMAS, Antoine**
**13004 MARSEILLE (FR)**

(74) Mandataire: **Plasseraud IP**
**66, rue de la Chaussée d'Antin**
**75440 Paris Cedex 09 (FR)**

(56) Documents cités:
EP-A2- 1 102 013          DE-A1-102005 012 502
DE-A1-102017 117 132      FR-A1- 3 081 781
US-A1- 2004 065 204

**Description**

L'invention concerne les systèmes de contrôle de filtres à air, en particulier les filtres à air habitacles, par exemple pour permettre un remplacement du média filtrant avant un vieillissement préjudiciable à la capacité de filtrer efficacement un flux d'air entrant vers un habitacle d'un véhicule, en particulier de véhicule motorisé.

Plus précisément, l'invention se rapporte à des procédés et des systèmes de contrôle permettant de contrôler un état d'un élément filtrant du type agencé dans une conduite d'aération et pouvant se démonter pour permettre une rechange.

Dans les applications de filtration d'air habitacle, il est connu d'utiliser des éléments filtrants pour filtrer les flux de fluide ou les fluides gazeux, par exemple pour filtrer un flux d'air qui est fourni à l'intérieur de la cabine d'un véhicule automobile.

L'augmentation de la pollution atmosphérique, en particulier dans les grandes villes, associée à l'utilisation de systèmes de climatisation dans les véhicules, nécessite que l'air circulant à l'intérieur d'un véhicule soit purifié et traité, au moyen de filtres appropriés. À cette fin, par exemple, un filtre à particules, un filtre à odeurs ou leurs combinaisons entrent en ligne de compte pour filtrer autant que possible les particules contenues dans l'air, les particules et les odeurs de l'air brut aspiré ou absorbées. Afin de permettre une purification efficace dans la durée, un remplacement régulier est nécessaire. Pour cela, des intervalles de maintenance peuvent être définis mais de tels intervalles ne reflètent pas forcément la quantité de particules contenues dans le matériau (média) du filtre considéré ou de l'usure du charbon actif ni a fortiori certaines autres défaillances du média filtrant.

Lorsqu'on analyse la pollution atmosphérique et les risques associés pour le corps humain, on répartit classiquement les particules fines dans les trois classes suivantes (PM correspondant à l'acronyme anglais « particulate matter » qui désigne la matière en suspension) :

- Les particules fines PM10 (0.01 mm), qui rassemblent les particules ayant un diamètre aérodynamique inférieur à 10 microns. Ces particules sont souvent appelées «particules grossières ». Elles sont généralement issues du trafic routier, de l'usure de la chaussée (et sont typiquement formées par combustion). Certaines de ces particules, selon leur taille, restent dans les poumons.
- Les particules fines PM2.5 (0,0025 mm), qui sont les particules dont le diamètre aérodynamique est inférieur à 2,5 micromètres. Ces particules peuvent atteindre les alvéoles pulmonaires.
- Les particules fines PM1 (0,001mm) qui constituent des «particules ultrafines » dont le diamètre est inférieur à 0,1 micromètre. Celles-ci sont considérées comme les particules les plus dangereuses, du fait notamment que ces particules, une fois inhalées, peuvent passer la barrière alvéolo-capillaire et pénétrer directement dans les poumons par la circulation sanguine et se propagent ainsi aux organes.

Les particules dont le diamètre est inférieur à 0,1 micromètre, sont aussi appelées « nanoparticules ». Les particules ultra fines sont les plus dangereuses car elles peuvent passer la barrière alvéolo-capillaire et pénétrer directement dans les poumons par la circulation sanguine et se propagent ainsi aux organes. Dans les conduites d'aération menant à un habitacle intérieur, les effets d'impaction permettent généralement de limiter la quantité de telles particules mais cet effet d'impaction est très limité pour les particules PM1.

Plus généralement, au regard du risque d'inhalation de telles particules, le filtre à air habitacle d'un véhicule nécessite d'être changé sur une base régulière afin de garantir une filtration efficace des particules et garantir un air habitacle sain. Le filtre à air doit en effet être changé dès lors que le taux maximal de colmatage est atteint ou dès qu'il se détériore (usure au cours du temps, formation de trou/déchirure). Le changer prématurément engendre des surcoûts injustifiés pour l'utilisateur final et le changer tardivement peut causer une dégradation de la qualité de l'air habitacle qui n'est pas souhaitable pour les passagers du véhicule.

Comme l'opération de changement du filtre à air est souvent délicate, en particulier lorsqu'il est situé dans une zone de montage difficile d'accès, il existe un besoin pour estimer l'état du filtre à air et éviter des examens visuels du média de filtration qui peuvent s'avérer inutiles. Il existe aussi un besoin d'avoir un outil de diagnostic du filtre jouant le rôle d'une aide à la prise de décision pour le changement d'un filtre qui donne une indication simple et claire sur la nécessité de changer le filtre à air.

Il a été proposé, dans le document FR 2 769 265, une méthode pour détecter l'état de dégradation d'un élément filtrant, par comparaison d'un paramètre d'écoulement du flux, en particulier la pression, le débit ou une vitesse du flux d'air arrivant dans l'habitacle d'un véhicule automobile. Ce type de méthode d'estimation a l'avantage de donner une information qui peut être très précise sur l'état de colmatage du filtre mais elle ne reflète pas directement une altération dans la capacité de l'élément filtrant à barrer le passage des particules fines.

Le document US 2004/065204 A1 prévoit de contrôler la qualité de l'air, dans un habitacle de véhicule agricole, en vérifiant que la concentration de particules décroît de manière comparable à une situation de référence considérée normale. Ce type de contrôle n'est pas adapté pour refléter directement le bon fonctionnement de l'élément filtrant, de façon applicable pour une grande variété de véhicules.

Il existe par conséquent le besoin d'améliorer la situation.

A cet effet, il est proposé selon l'invention un procédé de contrôle d'un filtre à air dans un véhicule, et plus particulièrement de l'élément filtrant d'un tel filtre qui est monté/fixé de façon amovible dans une conduite d'aération du véhicule débouchant dans un habitacle intérieur du véhicule, le procédé utilisant un diffuseur de type générateur d'aérosol permettant de générer un flux gazeux chargé en particules fines de différentes tailles choisies parmi au moins deux des trois classes de particules fines PM1, PM2,5 et PM10, le procédé incluant un test qui comprend les étapes consistant essentiellement à :

- configurer le diffuseur pour générer le flux ;
- faire circuler le flux ainsi généré, dans la conduite d'aération (depuis l'extérieur du véhicule jusqu'à au moins une section de sortie communiquant avec ou débouchant dans l'habitacle intérieur), l'élément filtrant étant interposé entre une section d'entrée de cette conduite et la section de sortie de façon à filtrer le flux gazeux ;
- collecter au moins une fraction du flux ayant traversé l'élément filtrant ; et
- réaliser par des moyens de détection optique des mesures en temps réel de concentrations de particules en fonction de leur répartition en taille, dans la fraction collectée ;
- déterminer par des moyens de traitement en liaison avec les moyens de détection optique, pour chacune des au moins deux classes choisies, un taux d'efficacité de séparation représentatif d'un effet barrière de l'élément filtrant vis-à-vis des particules pour au moins deux classes choisies parmi les trois classes de particules fines PM1, PM2,5 et PM10, par utilisation desdites mesures en temps réel et d'informations de référence ou d'échantillonnage, qui sont par exemple relatives au flux brut généré par le diffuseur.

Dans des modes de réalisation, on fait entrer le flux brut généré par le diffuseur dans une section d'entrée de la conduite d'aération et il est permis de disposer, de préférence pour chaque classe de particules PM1, PM2,5 et PM10, d'au moins une information de référence représentative d'une concentration des particules (la classe considérée) dans ce flux brut. On comprend que ce genre d'information peut être obtenu avant le test de l'élément filtrant (via la récupération de données préenregistrées, résultant éventuellement d'un échantillonnage) et/ou après la réalisation d'un ensemble de mesures à l'extérieur du véhicule dans une région de diffusion du flux brut (flux brut qui est dirigé vers la conduite d'aération pour permettre des mesures du flux filtré parvenant dans l'habitacle et ainsi permettre le test).

On comprend que les informations ou données de mesure respectives permettent le calcul d'un ratio entre la quantité de particules en amont de l'étage de filtration d'air et l'aval au niveau de l'habitacle intérieur et également une comparaison à des seuils de référence qui représentent un seuil d'autorisation, qui peut être un seuil d'efficacité de séparation, au-delà-duquel il est permis de conserver l'élément filtrant testé. Typiquement, on réalise une étape de comparaison, afin de déterminer un état de l'élément filtrant parmi au moins deux états de caractérisation possibles dont un premier état représente un état de conservation de l'élément filtrant, permettant d'éviter un démontage de l'élément filtrant, et un deuxième état représentant un besoin de changer l'élément filtrant.

Avec un tel procédé, il est permis de contrôler l'élément filtrant avec des mesures rapide, relevant d'une méthode de métrologie en temps réel. Les données obtenues sont donc fiables et reflètent fidèlement la capacité à retenir les particules fines. Un filtre inefficace sera donc systématiquement dans l'incapacité de passer le test, ce qui s'avère important pour garantir l'absence de risque sanitaire lié à un défaut de filtration, surtout lorsque le véhicule reçoit un pic de fumées/pollution (pic avec un flux chargé hautement en particules, généralement avec des concentrations en particules allant de 1000 à 2000 $\mu g/m^3$).

Le procédé peut être mis en œuvre avec des capteurs ou unités de détection d'un genre compact, aptes à fournir des résultats de mesures en temps réel. De plus, la détection optique peut permettre une bonne sélectivité de la mesure, le cas échéant en réalisant les mesures dans une chambre ou région de détection située (à l'intérieur d'un canal interne du boîtier de l'unité) en aval d'un élément déflecteur sur lequel viennent buter les particules à analyser/détecter. La comparaison sur la base de ces résultats, obtenus avec une bonne sélectivité, permet de refléter un vieillissement de l'élément filtrant de façon non abstraite, les particules mesurées étant des particules réellement collectées à l'intérieur de l'habitacle, typiquement en regard d'une sortie de la conduite d'aération dans un mode actif de circulation d'air (de l'extérieur vers l'intérieur) de la conduite d'aération.

Le procédé peut faire intervenir, pour les mesures en temps réel et pour les éventuelles mesures pouvant être faites lors d'une phase de préparation, des moyens de détection optique incluant une source de lumière, de préférence configurée pour émettre un rayonnement lumineux focalisé sur une zone de détection, des photo-détecteurs captant des signaux de diffusion respectifs émis par les particules traversant la zone/chambre/région de détection.

De façon connue en soi, chaque unité de détection peut inclure un piège de lumière configuré pour recevoir le rayonnement lumineux en sortie de la zone de détection, de manière à empêcher un retour parasite du rayonnement lumineux vers la zone de détection.

Dans des formes de réalisation préférées, on peut utiliser au moins une unité de détection portative, du format d'un téléphone portable (format de poche), dont le mode de détection s'appuie sur une mesure optique de diffraction de la lumière émise par une source (interne à l'unité de détection) par lesdites particules fines. Le procédé peut comprendre la mise en route d'un ventilateur ou autre élément d'entraînement de flux gazeux vers la zone ou chambre de détection prévu à l'intérieur d'un boîtier délimitant l'unité de détection.

L'unité de détection peut être du type décrit dans les documents WO 2018/211044 et WO 2018/211049. Un flux d'air est ainsi forcé dans le boîtier de l'unité et un rayonnement (faisceau laser par exemple) est dirigé sur le flux. Au moins un photo-détecteur (ou capteur similaires), préférentiellement plusieurs photo-détecteurs sont judicieusement placés pour mesurer une grandeur représentative de la quantité de lumière diffractée par les particules. Chaque particule qui passe devant le faisceau laser diffracte une partie de ce faisceau vers un détecteur photosensible. Le spectre de diffraction est directement lié à la taille des particules, mais également à leur nombre (densité).

Dans des modes de réalisation, l'unité de détection peut présenter un canal, définissant une courbure et/ou des moyens déflecteurs permettant d'éviter l'encrassement des cellules de détection optique. Ceci permet de conserver une bonne précision des mesures, même après la réalisation de nombreux tests. Une étape de chauffage peut en outre être prévue, directement au sein du boîtier de l'unité de détection ou éventuellement à proximité, afin de limiter des effets néfastes d'humidité (avec un risque d'altérer l'analyse de la taille des particules).

Des mesures faites à l'extérieur et à l'intérieur, de part et d'autre d'extrémités de la conduite d'aération qui loge l'élément filtrant, peuvent être collectées de façon centralisées, in situ par un ordinateur pour l'exécution d'une routine des moyens de traitement, par un téléphone mobile apte à faire fonctionner une application logicielle formant les moyens de traitement ou éventuellement à l'aide d'un serveur distant, sans que ces exemples soient limitatifs.

Le procédé de contrôle du filtre à air convient pour toutes les applications de véhicules, y compris les véhicules de chantier ou agricoles, pour lesquels le coût du changement du filtre à air a un impact de coût non négligeable.

Le procédé peut aisément être mis en œuvre chez n'importe quel garagiste ou même chez un particulier, afin de mesurer l'efficacité d'un filtre à air habitacle, et ainsi donner au propriétaire du véhicule une information fiable relative à la nécessité ou non de changer son filtre à air pour habitacle. Il est permis de mesurer les concentrations de particules fines, classiquement dénommées PM1, PM2,5 et PM10 et ainsi d'en déduire l'efficacité du filtre vis-à-vis de ces particules fines.

Dans des formes de réalisation du procédé selon l'invention, on peut avoir recours à une ou plusieurs des caractéristiques suivantes :

- il est déterminé par les moyens de traitement que l'élément filtrant a passé avec succès le test, en fonction d'une comparaison entre un taux d'efficacité de séparation (obtenu via les mesures en temps réel) et un taux d'efficacité de séparation de référence.

- les moyens de traitement sont sous la forme d'un logiciel enregistré sur un support lisible par un ordinateur, et adapté pour être chargé sur cet ordinateur, le logiciel étant configuré pour permettre l'enregistrement de données de capteurs, appelés aussi unités de détection.

- le logiciel est aussi adapté pour détecter et optionnellement permettre de visualiser des erreurs ou incohérences telles que le défaut de montage d'un joint par exemple, un module de production de rapport de test, par exemple en format .pdf étant prévu avec le logiciel, de façon à fournir une synthèse du test reportant au moins le taux d'efficacité pour les classes de particules fines PM10, PM2,5 et PM1, et le cas échéant un avis ou recommandation pour changer ou non l'élément filtrant testé.

- le flux gazeux est généré de façon à former, pendant une sous-période durant le test, un pic de concentration du type représentatif d'un pic de fumées.

- le flux a pour ce pic de concentration une concentration (haute ou augmentée par rapport à des concentrations présentes peu de temps après, par exemple moins de 15 ou 30 secondes plus tard) qui dépasse 1000 ng/m$^3$, de préférence sans dépasser 2000 ou 3000 $\mu$g/m$^3$.

- un changement de l'élément filtrant est préconisé s'il est déterminé que le taux d'efficacité de séparation du filtre vis-à-vis d'au moins l'une des classes de particules fines est inférieur à une valeur seuil de référence déterminée, par exemple environ 95 % pour une mesure prise pendant la génération du pic de concentration.

- le procédé comprend une réitération du test avec les mêmes moyens de détection optique (même unité de détection) pour tester un autre élément filtrant ayant remplacé l'élément filtrant dans ladite conduite d'aération, lorsque le résultat de la détermination du taux d'efficacité correspond à une valeur inférieure à un seuil de référence pour passer le test ; typiquement, il est permis de générer, à l'aide d'un module de production des moyens de traitement, un deuxième rapport de test en sus du premier rapport de test ayant conduit à changer l'élément filtrant testé avant la réitération, ce rapport permettant de montrer l'effet de séparation amélioré avec le nouveau élément filtrant de remplacement.

- le test relatif à un élément filtrant est réalisé pour chacune des trois classes de particules fines PM1, PM2,5 et PM10.

- le flux gazeux est généré à partir d'une solution liquide ou gazeuse saline dépourvue de composés organiques.

- le flux gazeux est généré à partir d'une solution liquide saline permettant de générer des particules de chlorure de sodium.

- le taux d'efficacité de séparation de l'élément filtrant est déterminé, pour chacune des trois classes, en fonction d'un nombre de particules en aval de l'élément filtrant détecté dans un volume d'une chambre/zone de détection appartenant à une unité de détection de particules fines, et d'un nombre de particules en amont de l'élément filtrant détecté dans un volume d'une chambre/zone de détection appartenant à une autre unité (identique) de détection de particules fines ou à la même unité de détection de particules fines (la détection en temps réel est faite du côté aval de l'élément filtrant, la détection en amont pouvant constituer une première détection faite antérieurement à la deuxième détection du côté aval, en particulier lorsque la même unité de détection est utilisée).
- le procédé comprend une phase de préparation au cours de laquelle on fournit une première unité de détection configurée pour détecter des particules fines réparties dans les trois classes PM1, PM 2,5 et PM10, typiquement dans des conditions identiques à celles du test hormis la position à l'extérieur du véhicule de la première unité de détection, contrairement aux moyens de détection optique qui sont sous la forme d'une deuxième unité de détection configurée pour détecter des particules fines réparties dans les trois classes PM1, PM 2,5 et PM10.
- la deuxième unité de détection est de préférence identique à la première unité de détection.
- la phase de préparation comprend en outre la mise en place de la première unité de détection en position adjacente à la section d'entrée de la conduite d'aération, de préférence sur ou à l'aplomb d'un parebrise à l'avant du véhicule équipé de l'élément filtrant et la mise en place de la deuxième unité de détection dans l'habitacle intérieur.
- la phase de préparation comprend, dans une étape d'étalonnage précédant la mise en place de l'une au moins des unités de détection: la réalisation d'expériences utilisant la première unité de détection et la deuxième unité de détection, agencées en parallèle pendant une durée déterminée, par exemple en soumettant les unités de détection à des expériences de détection de particules fines réparties dans les trois classes PM1, PM 2,5 et PM10 et diffusées simultanément par des moyens de diffusion de particules communs ; et une estimation d'un facteur correctif, afin de permettre à ces unités de détection de fournir des résultats de mesures identiques avec une marge d'erreur inférieure à un seuil.
- l'estimation d'un facteur correctif est réalisée sur la base de mesures fournies par les unités de détection soumises aux expériences.
- postérieurement à la phase de préparation, le flux gazeux est généré par le diffuseur à une distance prédéterminée, de préférence comprise entre 1 m et 2,5 m, de la première unité de détection.
- le flux gazeux est généré pendant une phase de vaporisation dont la durée est prédéterminée, de préférence comprise entre 3 et 7 secondes.
- chacune des unités de détection enregistre et/ou transmet, pendant une durée de test par exemple supérieur ou égal à 30 secondes, de préférence comprise entre 90 secondes et 300 ou 400 secondes, des données représentatives de concentrations de particules pour permettre leur exploitation par les moyens de traitement.
- pour chacune des classes PM1, PM 2,5 et PM10, il est permis de déterminer par les moyens de traitement le taux d'efficacité de séparation, après une comparaison entre les données issues de la première unité de détection et les données issues de la deuxième unité de détection.

Il est aussi proposé un équipement de test d'élément filtrant, formant par exemple un outil de diagnostic d'un élément filtrant présent dans un véhicule, pour la mise en œuvre du procédé de contrôle selon l'invention, l'équipement de test comprenant :

- un diffuseur permettant de générer à l'extérieur du véhicule un flux gazeux chargé en particules fines de différentes tailles choisies parmi au moins deux des trois classes de particules fines PM1, PM2,5 et PM10 (de sorte à pouvoir être réparties par taille),
- des moyens de traitement, incluant un module logiciel comparateur configuré pour utiliser un ou plusieurs seuils et déterminer si un taux d'efficacité de séparation de particules fines de l'élément filtrant dépasse un seuil de recommandation de changement de l'élément filtrant, ce qui permet au module logiciel comparateur de déterminer un état de l'élément filtrant parmi au moins deux états de caractérisation possibles dont un premier état représente un état de conservation de l'élément filtrant, permettant d'éviter un démontage de l'élément filtrant, et un deuxième état représentant un besoin de changer l'élément filtrant,
- une première unité de détection pourvue de moyens de détection optique pour quantifier et caractériser des particules fines selon les trois classes, la première unité de détection disposant de moyens de transmission et/ou stockage d'une information de référence représentative d'une concentration des particules de chaque classe respective dans le flux gazeux tel que généré à l'extérieur du véhicule, ladite information de référence étant obtenue par la première unité de détection avant un test de l'élément filtrant et/ou après la réalisation d'un ensemble de mesures à l'extérieur du véhicule dans une région de diffusion dudit flux gazeux du diffuseur située près d'une section d'entrée d'une conduite d'aération du véhicule débouchant dans un habitacle intérieur du véhicule; et
- une deuxième unité de détection pourvue des mêmes moyens de détection optique que la première unité de détection pour quantifier et caractériser des particules fines selon les trois classes, la deuxième unité de détection étant entièrement distincte de la première unité de détection pour pouvoir être disposée dans l'habitacle intérieur du véhicule.

Avec ces dispositions, lorsque le flux gazeux généré par le diffuseur est mis à circuler dans la conduite d'aération (depuis l'extérieur du véhicule via la ou les sections d'entrée jusqu'à au moins une section de sortie) communiquant avec ou débouchant dans l'habitacle intérieur, la deuxième unité de détection est apte et configurée pour collecter au moins une fraction du flux gazeux ayant traversé l'élément filtrant, dans un état monté de cette deuxième unité dans l'habitacle intérieur, et réaliser par ses moyens de détection optique des mesures en temps réel de concentrations de particules en fonction de leur répartition en taille, dans ladite fraction collectée.

De préférence, des moyens de liaison inclus dans l'équipement permettent une communication entre les moyens de traitement et chacune parmi les unités de détection afin de recevoir au niveau des moyens de traitement des informations représentatives des mesures en temps réel et des informations de référence.

Selon une particularité, l'équipement comprend un chariot mobile pourvu d'un support de maintien pour maintenir la première unité de détection dans une première zone de réception.

Selon une particularité, les éléments de l'équipement sont (typiquement en totalité) logés dans un même contenant portatif, le cas échéant un contenant dont une partie de déplie/déploie, typiquement à la façon d'une mallette. Le contenant peut alors présenter une face interne ou deux faces internes complémentaires, avec des logement(s) individuels pour héberger sélectivement des parties de l'équipement.

Au moins une unité de détection constitue une partie séparable du contenant, en étant liée ou non à un autre appareil logé dans le contenant par un câble ou autre organe de communication.

Selon une option, le chariot mobile est pourvu aussi d'un support de maintien pour maintenir le diffuseur dans une deuxième zone de réception. On peut prévoir ainsi un premier support et un deuxième support.

Par ailleurs ou en complément, le chariot dispose de moyens pour écarter et maintenir une buse ou embout de diffusion du diffuseur à une distance de référence de la section d'entrée de la conduite d'aération, en permettant de maintenir une distance prédéterminée entre les zones de réception respectives du premier support et du deuxième support.

Le procédé peut être réalisé en utilisant un réservoir fixé de façon amovible sur le chariot, et qui contient typiquement une solution saline dépourvue de composés organiques.

Dans certaines options, l'élément filtrant peut être en partie ou entièrement inséré dans un tronçon de conduite ou dans un boîtier qui, éventuellement, peut se changer avec l'élément filtrant si ce dernier n'est pas monté détachable par rapport à cet élément périphérique non filtrant. De préférence cependant, la rechange ne concerne que l'élément filtrant en tant que tel, ce qui permet par exemple de réutiliser la conduite de circulation d'air dans lequel l'élément filtrant délimite les zones amont et aval.

Dans des formes de réalisation, une phase d'aération/aspiration peut être réalisée pendant la phase de préparation, afin de renouveler ou tout du moins assainir l'air présent dans l'habitacle intérieur. Eventuellement, une mesure rapide (qui dure moins d'une minute par exemple) à blanc peut être réalisée dans l'habitacle, lors de la phase de préparation.

On décrit maintenant brièvement les figures des dessins.

- La figure 1 est un schéma illustrant un exemple de mise en place d'un test pour contrôler l'état de l'élément filtrant du filtre à air, suivant un mode de réalisation de l'invention utilisant un capteur extérieur et un capteur intérieur.
- La figure 2 est un schéma illustrant le parcours des particules issues d'un flux généré par le diffuseur, depuis l'extérieur du véhicule ou est typiquement prévue une première unité de détection pour des mesures de concentration de particules à l'extérieur, jusqu'à l'habitacle intérieur où se trouve la deuxième unité de détection du flux permettant de réaliser les mesures de concentration de particules à l'intérieur du véhicule.
- La figure 3 est une vue d'un filtre à air connecté avant son assemblage dans la conduite aération du véhicule.
- La figure 4 est un logigramme montrant des étapes d'échantillonnage et de mise en place lors d'une préparation préalable au test, ainsi que des étapes de mise en œuvre d'un contrôle d'efficacité de la séparation d'un élément filtrant vis-à-vis de particules fines.
- La figure 5 illustre un exemple de montage d'une unité de détection formant des moyens optiques pour mesurer des concentrations de particules fines selon leur taille, pour une utilisation à l'intérieur de l'habitacle en collectant un flux gazeux sortant d'une section de sortie de la conduite d'aération équipée du filtre à air à tester.

Ci-après un exposé détaillé de plusieurs modes de réalisation de l'invention assorti d'exemples et de référence aux dessins. Sur les différentes figures, des références identiques indiquent des éléments identiques ou similaires.

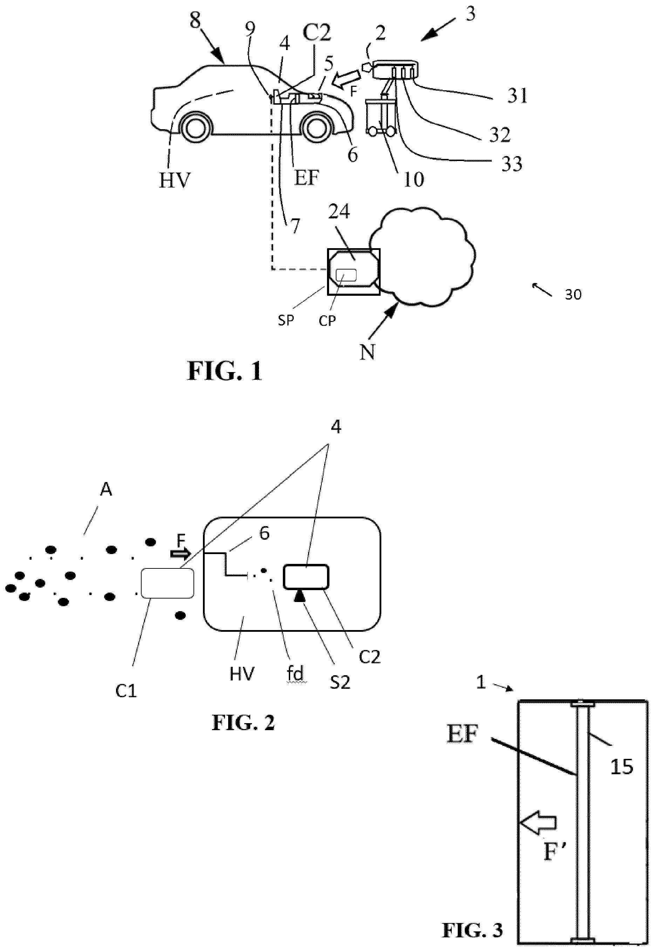

En référence aux figures 1 et 3, on peut voir un filtre à air 1 qui présente un élément filtrant EF pourvu d'une couche d'un média filtrant 15, entouré et maintenu par un support qui permet de définir une configuration déterminée du filtre 1, avec typiquement une face côté amont et une face opposée, côté aval de la filtration. L'élément filtrant EF permet de filtrer un flux d'air, en particulier un flux d'air devant être introduit dans un habitacle HV (ou espace clos comparable) d'un véhicule 8 motorisé via un circuit de ventilation ou analogue définissant une conduite d'aération 6. Lorsque la configuration déterminée est une configuration à plat, l'élément filtrant EF s'étend généralement de façon perpendiculaire au flux d'air à filtrer dans la zone de montage de l'élément filtrant EF. Généralement, une des deux faces du média filtrant 15 présente une couche dont la surface est exposée au flux d'air à filtrer.

L'élément filtrant EF est fixé de façon amovible dans la conduite d'aération 6, par exemple en étant extractible d'un boîtier du filtre à air 1 ou en se détachant avec la possibilité d'extraire le cadre périphérique de l'élément filtrant EF ou élément de maintien analogue pour le maintien du média filtrant 15.

Comme illustré sur la figure 1, l'équipement de test ou outil de diagnostic 30 peut inclure une ou plusieurs unités de détection C1, C2 (voir figure 2 pour le cas avec l'unité C1 également présente) servant à déterminer un taux d'efficacité d'un filtre à air 1, en particulier de son élément filtrant EF qui doit séparer une zone d'amont d'une zone d'aval dans la conduite d'aération 6. Chaque unité C1, C2 de l'équipement 30 de test peut constituer un outil portable.

L'équipement 30 comporte un diffuseur 3 pour générer à l'extérieur du véhicule 8 un flux gazeux F chargé en particules fines de différentes tailles, ceci afin de simuler une pollution réelle qui serait rencontrée lors de la conduite. Dans tout ce qui suit, les termes « particules » et « particules fines » servent à designer des particules fines se trouvant dans l'une des trois classes de particules fines PM1, PM2,5 et PM10.Le cas échéant, le diffuseur 3 peut permettre de simuler un pic de pollution avec un flux chargé en particules en suspension qui atteignent ou dépassent une concentration de 1000 $\mu$g/m$^3$. Ainsi, le flux gazeux F peut être généré de façon à former, par exemple pendant une sous-période durant le test T, un pic de concentration du type représentatif d'un pic de fumées. Pour cela, le flux F a typiquement pour ce pic de concentration une concentration augmentée qui dépasse 1000 ou 1500 ng/m$^3$, éventuellement sans dépasser 2000 ou 3000 $\mu$g/m$^3$.

Le diffuseur 3 peut être du genre contenant une solution saline mise sous pression et constitue ainsi un générateur d'aérosol A. En référence aux figures 1 et 2, on peut voir que l'aérosol A est par exemple généré depuis une buse 2 du diffuseur 3, à un niveau de hauteur qui peut varier sans s'élever trop au-dessus d'une section d'entrée de la conduite d'aération 6. Un angle de positionnement de la buse 2 peut optionnellement être ajusté pour améliorer la rapidité du test T. Dans l'exemple illustré, l'orientation de la buse 2 du diffuseur 3 est généralement horizontale. Bien entendu, plusieurs buses peuvent être actionnées simultanément le cas échéant, le diffuseur 3 pouvant inclure un groupe de plusieurs buses ou organes analogues de diffusion d'un flux gazeux en direction de la section d'entrée 5.

Le diffuseur 3 présente typiquement trois parties principales : une partie à réservoir(s) pouvant consister en une cartouche qui contient la suspension/solution, une valve permettant de libérer les bouffées ou doses de suspension/solution, et un organe d'actionnement permettant d'exercer une pression ou action sur la valve. Chaque cartouche peut inclure un récipient généralement en aluminium (avec un revêtement interne et/ou externe dans des options).

La valve peut être une valve doseuse de sorte qu'il existe une chambre de dosage. Un volume précis est libéré suite à l'actionnement de la valve (par une pression ou une dépression). Le volume liquide libéré vers la chambre de dosage peut dépasser 200 $\mu$L pour les besoins du test et peut de préférence dépasser 0,5 mL de préférence sans dépasser 4 ou 10 mL.

Alternativement, la valve peut être une valve actionnable en continu de sorte que la masse de produit distribuée dépend de la durée d'actionnement, ci-après appelée durée de vaporisation. Une quantité précise peut être libérée suite à l'actionnement de la valve (par une pression ou une dépression) si la durée d'actionnement est contrôlée : celle-ci peut correspondre à un actionnement continu pour obtenir une durée de vaporisation, par exemple qui dure 5 secondes.

Le diffuseur 3 est adapté pour générer un aérosol A avec au moins une fraction PM2.5 et une fraction PM10. Ces fractions peuvent être les plus intéressantes pour les besoins du test T.

L'équipement 30 comprend ici une première unité de détection C1 pourvue de moyens de détection optique pour quantifier et caractériser des particules fines selon les trois classes PM1, PM2,5 et PM10. Cette première unité de détection C1 dispose de moyens de transmission et/ou stockage d'une information de référence représentative d'une concentration des particules de chaque classe respective dans le flux gazeux F tel que généré à l'extérieur du véhicule 8. Dans l'exemple illustré, la première unité de détection C1 est prévue pour participer à des mesures pendant le test T, en étant placé à l'extérieur du véhicule 8, tandis qu'une deuxième unité de détection C2 est positionnée pendant ce temps dans l'habitacle intérieur HV.

Dans ce type de configuration utilisant deux unités de détection C1, C2, de part et d'autre des extrémités opposées de la conduite d'aération 6 intégrant l'élément filtrant EF, la première unité de détection C1 permet des mesures en temps réel et fournit ainsi des informations de référence. Les informations de référence, représentatives de concentrations ou quantités de particules fines situées en amont de l'élément filtrant EF, vont permettre une comparaison avec des informations correspondantes obtenues par la deuxième unité de détection C2 placée en aval de l'élément filtrant EF.

Ici, les informations de référence sont obtenues rapidement, en temps réel en réalisant un ensemble de mesures à l'extérieur du véhicule 8, en pratique dans une région de diffusion du flux gazeux F venant d'être généré par le diffuseur 3. Pour cela, il suffit que la première unité de détection C1 soit située près d'une section d'entrée 5 de la conduite d'aération 6 du véhicule 8 ou tout du moins dans l'environnement extérieur auquel est exposé le véhicule 8.

Dans des variantes, des informations de référence peuvent être obtenues par avance. Par exemple, chaque test T peut être réalisé sans mesures de concentration du flux gazeux externe (flux sale). En lieu et place, des valeurs des concentrations en particules fines ont été préenregistrées, typiquement dans un module de comparaison CP dont dispose les moyens de traitement 24 pour le calcul du taux d'efficacité. Eventuellement, de telles valeurs préenregistrées peuvent constituer un tableau ou abaque, facilitant la comparaison par le module de comparaison CP qui reçoit en outre les mesures en temps réel de la part des moyens de détection optique formés par l'unité de détection C2. Dans ce cas, l'équipement 30 utilisé lors d'un test T peut comprendre une seule unité de détection C2, qui peut être la même pour obtenir les concentrations préenregistrées lors d'un étalonnage et pour mesurer en temps réel, à l'intérieur de l'habitacle intérieur HV, les concentrations en particules en aval de l'élément filtrant EF.

Le but de cet étalonnage peut être alors simplement de déterminer le tableau, abaque ou ensemble de données de référence utiles pour la comparaison faite en vue de déterminer si l'élément filtrant EF a passé le test. Les conditions expérimentales de l'étalonnage et du test T doivent alors être identiques. Pour cela on peut prévoir de placer systématiquement le diffuseur 3 à une distance prédéterminée d de la section d'entrée 5 de la conduite 6 et actionner le diffuseur 3 systématiquement de la même façon, ce diffuseur 3 pouvant être du type à chambre de dosage (chambre séparée du réservoir en produit, par exemple en prévoyant un clapet anti-retour) ou avec un autre moyen de régulation de la quantité de produit distribuée, afin de distribuer des doses identiques d'une utilisation à une autre.

Plus généralement, on utilise tout moyen 4 d'acquisition de données/informations pour collecter des informations représentatives de concentrations ou de quantités de particules fines dans l'habitacle intérieur HV. Comme illustré sur la figure 1, l'unité de détection C2 peut former tout ou partie d'un appareil pourvu de moyen de transmission d'informations de mesure. Ici, un tel appareil qui forme le moyen 4 d'acquisition présente un dispositif 9 de communication pour transmettre les informations vers un téléphone portable individuel SP ou autre appareil de traitement permettant de réaliser une ou plusieurs étapes de comparaisons, par exemple pour comparer à un seuil de référence un paramètre d'efficacité de séparation obtenu par des moyens de traitement 24 de l'appareil, typiquement pour chacune des trois classes de particules fines. L'appareil de traitement peut être constitué par tout terminal récepteur, de sorte qu'il peut aussi être un ordinateur, une tablette ou tout autre équipement électronique capable de communiquer avec l'une au moins des unités de détection C1, C2, en particulier afin de recevoir les données de mesure relatives à la concentration des particules fines.

Dans des options préférées, il est fait appel à une comparaison entre des taux d'efficacité de séparation, correspondant par exemple à un ratio ou pourcentage d'efficacité à séparer les particules fines. La formule suivante peut être utilisée pour chaque classe :

$$\text{Taux de séparation} = 1 - (Cp_1/Cp_2)$$

où $Cp_1$ est la concentration en particules fines de la classe considérée, mesurée dans l'habitacle intérieur, $Cp_2$ étant la concentration en particules fines de de la classe considérée, mesurée à l'extérieur dans une région de diffusion du flux généré par le diffuseur 3.

Dans des variantes, l'appareil de traitement peut être configuré pour fournir un résultat de test sans faire appel à une comparaison mathématique avec un seuil représentatif de l'efficacité. Dans ce cas, c'est l'opérateur ou utilisateur final qui reste chargé de considérer s'il existe un besoin de changer l'élément filtrant, au regard des résultats du test.

Le cas échéant, une opération de comparaison ou opérations analogues pour décider du résultat de test peut être délocalisée, en étant réalisé au niveau d'un serveur distant accessible via un réseau N. Dans ce cas, l'appareil de traitement peut simplement transmettre des informations de mesure et/ou un paramètre représentatif du ou des taux d'efficacités calculés pour le test T.

En référence à la figure 1, le diffuseur 3 de l'équipement 30 est adapté pour ne pas générer une pollution agressive ou préjudiciable pour la santé humaine. Ainsi, le diffuseur 3 comprend typiquement un réservoir contenant une solution saline dépourvue de composés organiques. La composition des particules solides diffusées peut consister essentiellement ou complètement en du chlorure de sodium (NaCl).

Le diffuseur 3 permet de distribuer des doses dont les caractéristiques se retrouvent à l'identique d'un test à l'autre, le flux généré F étant dans ce cas chargé avec sensiblement la même concentration particules fines, avec des particules réparties dans les trois classes PM 10, PM 2,5, PM1. En référence à la figure 1, on peut voir que le diffuseur 3 peut présenter le cas échéant des sous-réservoirs 31, 32, 33 permettant de stocker différents types de particules solides de NaCl et pouvant être ouverts sélectivement pour créer un mélange ou dose dans une chambre de dosage du diffuseur. Dans ce cas le diffuseur 3 peut correspondre à un ensemble d'appareils aérosols combinés ensemble, et peut présenter plusieurs buses 2 pour la diffusion dans une direction donnée du flux gazeux F chargé en particules solides. Alternativement, les particules fines de taille variable sont stockées dans un même réservoir unique. Il peut être prévu un échantillonnage lors d'une première utilisation du contenu du ou des réservoirs du diffuseur 3, lorsque le test se passe d'unité de détection C1 à l'extérieur du véhicule 8 et que les informations de référence sont ainsi connues par avance.

Selon les options, l'unité de détection C1 et/ou C2 peut communiquer de différentes façons avec l'appareil de traitement qui peut être un terminal, par exemple un téléphone portable, un ordinateur ou autre terminal à interface de communication, permettant de délivrer des informations de synthèse du test réalisé par utilisation des informations du ou des unités de détection C1, C2. Dans l'exemple illustré sur la figure 1, l'unité de détection C2 présente une antenne ou autre dispositif 9 de communication sans fil avec un tel terminal. Alternativement une liaison filaire peut être prévue. Plus généralement toute liaison adaptée peut permettre de réaliser la communication entre chacune des unités de détection C1, C2 et un terminal de délivrance d'information de synthèse du test. Par ailleurs, il peut être prévu d'inclure l'unité de détection C2 dans un tel terminal dans certains modes de réalisation. Ou inversement, on peut aussi considérer que ce sont les fonctions de traitement de données pour permettre de déterminer des résultats de tests qui sont intégrées dans une unité de détection intégrant les moyens de traitement 24.

En référence à la figure 1, le terminal ou appareil de traitement est par exemple un téléphone portable individuel SP qui inclut un circuit intégré formant une unité de calcul disposant de moyens traitement 24, et disposant d'un module de comparaison CP pour permettre des comparaisons entre des données/informations de concentrations, en particulier entre des données de mesures relatives à un flux gazeux (flux d'air) circulant dans l'habitacle intérieur HV au cours du test et des données ou informations de référence représentative du flux gazeux F chargé en particules généré pour les besoins du test.

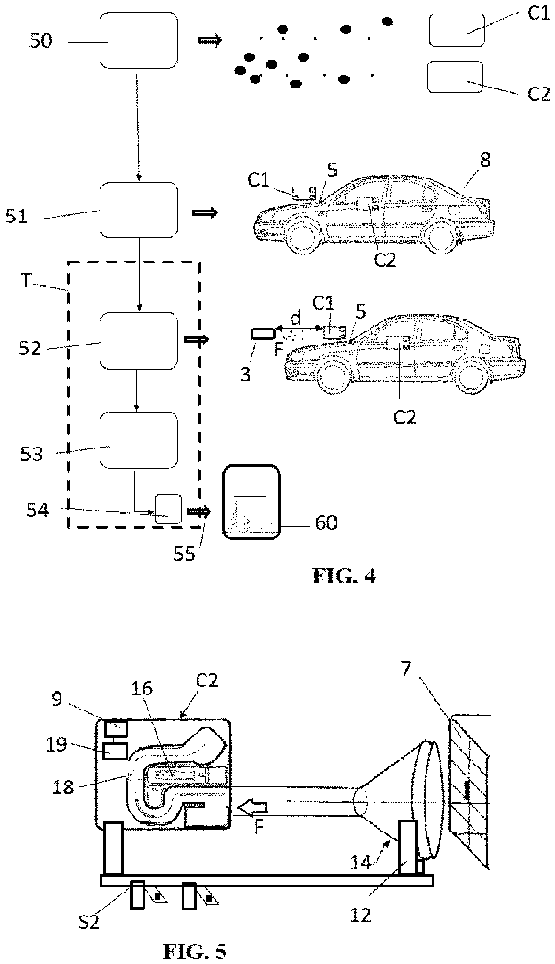

Il peut être prévu un chariot 10 mobile pour rassembler l'équipement 30 dans un seul emplacement et/ou pour faciliter le transport et éventuellement la mise en place du diffuseur 3. Dans l'exemple non limitatif de la figure 1 le chariot 10 est pourvu d'un premier support de maintien pour maintenir la première unité de détection C1 dans une première zone de réception et d'un deuxième support de maintien pour maintenir le diffuseur 3 dans une deuxième zone de réception. Typiquement, le chariot 10 est pourvu d'éléments articulés et verrouillables en position fixe, afin d'écarter et maintenir au moins une buse 2 ou embout de diffusion du diffuseur 3 à une distance de référence de la section d'entrée 5 de la conduite d'aération 6, tout en maintenant une distance prédéterminée (d, cf. figure 4) entre les zones de réception respectives du premier support et du deuxième support.

L'équipement 30 de test peut être prévu avec des moyens de traitement 24 sous une forme de logiciel à charger ou télécharger. Les moyens de traitement 24 incluent le module logiciel comparateur CP configuré pour utiliser un ou plusieurs seuils et déterminer si un taux d'efficacité de séparation de particules fines de l'élément filtrant EF dépasse un seuil de recommandation de changement de l'élément filtrant EF. En pratique, n'importe quel terminal ou appareil de traitement peut convenir pour exécuter un logiciel de mise en œuvre du test module, typiquement un opérateur exécute un logiciel comparateur ou autre module de comparaison CP, afin de déterminer un état de l'élément filtrant EF parmi au moins deux états de caractérisation possibles dont un premier état représente un état de conservation de l'élément filtrant EF, permettant d'éviter un démontage de l'élément filtrant, et un deuxième état représentant un besoin de changer l'élément filtrant EF.

### Exemple de préparation du test

En référence à la figure 4, une phase de préparation est réalisée avant le test T. Une étape d'étalonnage 50 peut ainsi précéder la mise en place de l'une au moins des unités de détection C1, C2. Dans cet exemple non limitatif, il s'agit de réaliser des expériences pendant une durée déterminée, en soumettant en parallèle la première unité de détection C1 et la deuxième unité de détection C2 à des expériences de détection de particules fines réparties dans les trois classes PM1, PM 2,5 et PM10 et diffusées simultanément par des moyens de diffusion de particules communs.

La deuxième unité de détection C2 peut être structurellement identique à la première unité de détection C1, au moins pour ce qui concerne sa partie de détection optique. Le cas échéant, on peut monter les unités de détection C1, C2 sur un support S2, 12 qui sera utilisé pour le test T, et par exemple tel qu'illustré schématiquement sur la figure 5, avec au moins un élément collecteur 14 évasé pour capter le flux gazeux F chargé, cet élément collecteur 14 étant relié via un conduit à une entrée d'un canal interne de l'unité de détection C1 ou C2. La source de radiations électromagnétiques 16 peut être positionnée le long d'un tronçon de ce canal, en position adjacente à la région/zone de détection 18 où peuvent être placés des photo-détecteurs ou autres cellules de détection optique. La source 16 peut typiquement émettre un rayonnement lumineux focalisé vers la zone/chambre de détection 18.

Ici dans l'exemple de la figure 4, on met en parallèle les deux unités de détection C1, C2, pendant 10 à 15 minutes. On réalise une diffusion de particules fines tout en faisant fonctionner ces unités de détection C1, C2 qui permettent de détecter chacun la teneur en particules PM1, PM2,5 et PM 10. Bien entendu la durée d'étalonnage peut varier selon les besoins et la nature des unités de détection C1, C2. Chaque unité de détection peut consister en ou inclure un dispositif à capteurs commercialisé par Groupe Tera sous le nom de NextPM® (dont la partie de détection optique peut correspondre sensiblement au dispositif décrit dans les documents WO 2018/211044 et WO 2018/211049). Plus généralement, on peut utiliser tout système optique, de préférence de type miniaturisé sous forme de boitier ou mallette, afin de réaliser la détection et la mesure de concentrations de particules fines. Avec ce genre d'unité(s) de mesure, le procédé de test peut typiquement être réalisé par un équipement ou outil portatif, de préférence sans besoin de capteur préalablement installé/embarqué dans le véhicule ni démontage préalable de partie(s) du circuit d'aération.

Le diffuseur 3 utilisé lors de l'étalonnage 50 est typiquement identique au diffuseur qui va être utilisé lors d'étapes du test T. Alternativement on peut produire un nuage ou un flux de particules fines par tous moyens adaptés lors de cette étape d'étalonnage 50. On comprend que les deux unités de détection C1, C2 ont leur entrée orientée du même côté, de sorte que leur chambre (ou région) formant une zone de détection 18 respective sont alimentées par un flux gazeux F amené suivant une même direction (i.e. en parallèle).

Cet étalonnage 50 peut être réalisé seulement une seule fois avant plusieurs tests. Il peut éventuellement être refait après avoir pratiqué un grand nombre de tests, par exemple au moins une centaine de tests T. À l'occasion de cet étalonnage il est permis d'estimer et d'ajouter un facteur correctif sur la deuxième unité de détection C2 pour faire coïncider les résultats de cette deuxième unité de détection C2 avec les résultats de la première unité de détection C1. Ainsi, on peut corriger un effet de dérive et les résultats pour les particules des catégories respectives PM1, PM 2,5, PM 10 vont être identiques ou présentés des différences marginales, ce qui permet de s'assurer d'une cohérence pour la comparaison des mesures à la fin des tests T. Plus généralement, on peut procéder à tout expérience adaptée permettant à ces unités de détection C1, C2 de fournir des résultats de mesures sensiblement identiques avec une marge d'erreur inférieure à un seuil.

Dans certaines options, un terminal formant les moyens de traitement 24 peut superviser l'étalonnage et peut notifier un état d'erreur s'il existe un écart entre les mesures des deux unités de détection C1, C2 qui est supérieur à un seuil de dérive donné, par exemple supérieur d'un facteur deux.

Juste avant la réalisation du test, il y a aussi une préparation consistant notamment à positionner la ou les unités de détection C1, C2. En référence aux figures 1 et 2, dans une étape 51 de positionnement, la première unité de détection C1 est placée en position adjacente à la section d'entrée 5 de la conduite d'aération 6, par exemple sur ou à l'aplomb d'un parebrise à l'avant du véhicule 8 équipé de l'élément filtrant EF. Dans cette étape 51, la deuxième unité de détection C2 peut être placée dans l'habitacle intérieur HV en faisant face à la section de sortie 7 de la conduite d'aération, le cas échéant en étant accolée à cette sortie 7. L'élément collecteur 14 évasé peut être utilisé lors de cette mise en place pour venir en contact ou plus près de la sortie 7.

Un support S2 peut être prévu pour une fixation de l'unité de détection C2 sur un élément présent dans l'habitacle HV, par exemple sur le dessus d'un accoudoir central en position abaissée. Des sangles, lanières ou autres liens d'attache souples ou rigides peuvent être prévus pour rendre le support S2 solidaire d'un point d'appui fixe. Un ajustement en position, en hauteur en particulier, peut être permis par une partie d'attache ajustable dans sa position en hauteur, le cas échéant en utilisant des crans pour positionner l'unité de détection C2 par rapport à une base du support S2. De tels crans ou autres éléments de retenue 12 peuvent être répartis entre une partie de support arrière, par exemple supportant l'unité de détection C2, et une partie de support avant pouvant optionnellement soutenir l'élément collecteur 14 placée de façon proximale par rapport à la sortie 7 de la conduite d'aération 6.

On a mis ainsi en place des moyens 40 d'acquisition d'informations de mesures, formés par les unités C1 et C2, utilisables dans des positions qui peuvent être sensiblement les mêmes d'un test à l'autre, typiquement quel que soit le véhicule 8 équipé du filtre à air 1. Pour faciliter la répétabilité du test T, il est typiquement prévu au moment de la préparation, ici dans l'étape 51 de positionnement, de placer systématiquement le diffuseur 3 à une distance prédéterminée d de la section d'entrée 5 de la conduite 6 en paramétrant cette distance suffisamment grande, sans dépasser 2 ou 2, 5 mètres, pour permettre d'optimiser la quantité de particules entrant dans la conduite d'aération 6. Par exemple cette distance prédéterminée d est d'environ 1,5 m ou 2 m et peut être ajustée à l'aide du chariot 10 ou autre mécanisme de support du diffuseur 3 ayant un élément de référence, supportant typiquement la première unité de détection C1, pouvant se placer à l'aplomb de la section d'entrée 5. La première unité de détection C1 peut être supportée par un bras ou un élément de support positionné au-dessus de cette unité C1 ou latéralement sur côté, afin de faciliter un positionnement proche de la section d'entrée 5 sans utiliser un appui axial (appui descendant) contre le véhicule 8. La première unité de détection C1 peut en outre être supportée à une hauteur prédéfinie ou à une distance (mesure verticalement/suivant la hauteur) qui est constante par rapport au niveau où se situe la section d'entrée 5.

## Exemple de réalisation du test

En référence à présent aux figures 1, 2 et 4, après l'étape 51 de positionnement des moyens d'acquisition 40, le test T peut commencer par une étape 52 dans laquelle le diffuseur 3 placé en regard de la section d'entrée 5 génère le flux F de gaz chargé en particules. Il s'agit ici d'actionner le diffuseur 3 systématiquement de la même façon, afin de diffuser le même flux gazeux chargé en particules fines solides. Pour cela, le diffuseur 3 peut être du type à chambre de dosage ou à actionnement continu, dont la durée est contrôlée pour contrôle la durée de vaporisation.

Dans le cas avec une chambre de dosage, celle-ci peut être séparée du réservoir en produit, par exemple en prévoyant un clapet anti-retour. Plus généralement, tout moyen de régulation de la quantité de produit distribuée peut être prévu, afin de distribuer des doses identiques d'une utilisation à une autre.

Dans des formes de réalisation, le flux gazeux F chargé en particules fines en suspension peut être généré en réalisant une pluralité d'activations, de sorte à ce que le flux gazeux F résulte d'un cumul de plusieurs doses délivrées, par exemple obtenues après un nombre compris entre 2 et 7 activations consécutives effectuées à un certain intervalle de temps (par exemple moins de 10 ou 20 secondes). Ainsi, il peut être prévu de libérer au moins 1500 ou 3000 μg de particules issues du diffuseur 3 au cours du test T. Il peut aussi être prévu d'augmenter, sur un court laps de temps, la concentration en particules, par exemple en activant une buse additionnelle inclue dans le diffuseur 3 ou qui fait partie d'un autre diffuseur agencé en parallèle. Ce pic peut aussi être généré, en alternative ou en complément, en activant un dispositif de ventilation guidant de manière accélérée le flux dans la conduite d'aération 6.

Le flux gazeux F généré par le diffuseur 2 est mis en circulation dans la conduite d'aération 6 pour atteindre le débouché d'au moins une section de sortie 7 dans l'habitacle intérieur HV. La figure 2 illustre la collecte réalisée dans l'habitacle intérieur HV afin de collecter au moins une fraction fd du flux gazeux F ayant traversé l'élément filtrant EF dans la conduite 6.

Dans l'option d'utilisation de la figure 1, l'air extérieur est aspiré, par exemple de façon conventionnelle (un ventilateur du véhicule pouvant être mis en marche ou un ventilateur prévu dans une unité de détection C1, C2), et le flux entrant F peut passer au travers d'une grille de ventilation situé à la section d'entrée 5. Cette section d'entrée 5 peut correspondre par exemple à une section de passage sous la forme d'une grille qui retient les feuilles, les insectes et autres particules de grande taille.

On comprend que l'élément filtrant EF fait partie d'un filtre à air 1 d'habitacle qui est conçu pour éliminer le plus possible la poussière, les pollens, la suie et les autres particules, avant que l'air purifié n'atteigne l'habitacle, optionnellement via un évaporateur 91 qui refroidit l'air. L'air sec et frais peut typiquement se réchauffer alors dans un échangeur de chaleur lorsqu'une fonction de climatisation, pour atteindre la température d'habitacle choisie (généralement choisie par le conducteur). L'air purifié est alors orienté par divers volets et buses vers les endroits souhaités, à l'intérieur de l'habitacle HV.

Pour une génération d'un flux gazeux F avec des particules ayant une concentration déterminée et connue de particules fines PM1, PM2,5 et/ou PM10 grâce au diffuseur 3 placé face à la section d'entrée 5, on peut préférer utiliser un diffuseur 3 dont la concentration en particules peut atteindre ou éventuellement dépasser 1000 μg/m$^3$ lors de la diffusion.

A l'étape 53 de mesures en temps réel illustrée sur la figure 5, on réalise par des moyens de détection optique (ici formés dans l'unité de détection C2) des mesures de concentrations de particules en fonction de leur répartition en taille, dans la fraction fd collectée au niveau de l'unité de détection C2. L'unité de détection C2 peut présenter un contrôleur 19 ou un circuit de traitement adapté disposant des capacités pour discriminer des concentrations de mesures selon les catégories de particules fines. Le dispositif 9 de communication relié au contrôleur 19 peut transmettre à la volée les informations de mesure ainsi discriminées aux moyens de traitement 24, via la liaison prévue avec l'appareil de traitement, ici un téléphone SP ou autre terminal récepteur ayant un système d'exploitation et des fonctions d'ordinateur (couramment appelé « SmartPhone » lorsqu'il s'agit d'un téléphone comme dans le cas de la figure 1).

Les moyens de traitement 24 peuvent être prévus à l'intérieur du téléphone portable individuel SP, typiquement cellulaire ou connecté à tout type de réseau N de communication sans fil, capable de générer et permettre la lecture d'un tableau ou document de synthèse 60 relatif au test T (diagnostic) et aux résultats d'efficacité déterminés pour l'élément filtrant EF. En référence à la figure 4, on peut voir une étape 55 de génération d'un rapport simple en pdf avec un certain nombre de données, dont typiquement :

- La date ;
- La Marque et/ou la dénomination de modèle du véhicule 8 ;
- La référence d'immatriculation du véhicule 8 ;
- L'efficacité de l'élément filtrant EF du filtre à air 1, exprimée en pourcentage d'efficacité ou ratio équivalent ;
- Conclusion du test : Filtre « à changer » ou Filtre « Performant ».

Ce résultat du test ou diagnostic T peut être préparé et transmis au terminal récepteur au moins en cas de changement requis pour l'élément filtrant EF.

Le module comparateur CP peut être configuré pour utiliser un ou plusieurs seuils et déterminer si une quelconque donnée de collecte parmi les données de mesures dépasse un seuil de recommandation de changement de l'élément filtrant EF, par exemple par comparaison avec une situation préenregistrée reflétant un essai réalisé sans élément filtrant EF avec le même type d'exposition, c'est-à-dire avec des concentrations de particules comparables à l'extérieur du véhicule 8 dans le flux gazeux F. On préfère cependant typiquement calculer des taux d'efficacité propres aux tests réalisés. Ceci permet au module comparateur CP de déterminer un état de l'élément filtrant EF : à conserver ou à changer. Le cas échéant, une pondération peut intervenir en fonction de si oui ou non le niveau de concentration dans l'habitacle intérieur HV (malgré une phase d'aération/aspiration pouvant être réalisée pendant la phase de préparation) est trop proche du niveau de concentration observé pour un véhicule testé en l'absence totale d'élément filtrant EF.

Lorsque le test T est mis en œuvre chez un garagiste, les moyens de traitement 24 peuvent permettre de générer de façon automatisée un tel document de rapport, par exemple en format '.pdf' ou analogue, reportant la ou les informations représentatives de l'état déterminé de l'élément filtrant EF, au moins lorsque l'état déterminé est ledit deuxième état (« à changer »). Ainsi, un opérateur n'intervient qu'au moment de la phase de préparation et éventuellement pour initier la génération du flux gazeux F lors de l'étape 52. Les étapes 53 et 54 qui suivent ne requièrent pas d'intervention humaine. Une fois les données de mesure acquises au niveau des unités de détection C1, C2 puis récupérées pour leur traitement par les moyens de traitement 24, il est prévu une étape 54 de détermination d'un taux d'efficacité de séparation.

Ici, un taux d'efficacité de séparation représentatif d'un effet barrière de l'élément filtrant EF vis-à-vis des particules est déterminé pour au moins deux classes choisies parmi les trois classes de particules fines PM1, PM2,5 et PM10, de préférence pour toutes ces classes. On comprend que les mesures en temps réel des unités de détection C1, C2 sont utilisées dans la détermination de ces taux. Plus généralement on utilise tout genre d'informations de référence pour comparer les concentrations (en masse dans le cas présent) des particules présentes dans l'habitacle HV et reflétant la quantité de particules ayant traversé le conduit d'aération 6 par rapport à la quantité correspondante de particules amenés avec le flux gazeux F à la section d'entrée 5 de cette conduite 6.

Typiquement, on prévoit à une étape 55 de synthèse/conclusion du test T que le changement de l'élément filtrant EF soit préconisé dès lors que le taux d'efficacité déterminé vis-à-vis de l'une quelconque des trois catégories de particules fines est inférieur à une valeur seuil de référence déterminée, par exemple 95 % pour une mesure prise pendant un pic de fumée (voir aussi tableaux ci-dessous).

Idéalement, le test T est mis en œuvre de façon à ce que sa durée n'excède pas 5 ou 6 minutes, en incluant l'étape 55 de génération du rapport. Pour la robustesse du test, la simplicité du dispositif 9 de communication tout en favorisant la rapidité du test T, on peut prévoir de connecter de façon filaire, par une connexion de type USB ou similaire chaque unité de détection C1, C2 au terminal récepteur prévu pour le traitement.

En référence aux figures 2 et 4, le test T peut commencer en générant l'aérosol A et en lançant une séquence logicielle d'enregistrement de données de mesure. Il est typiquement prévu que la phase de vaporisation ait la même durée prédéterminée, de préférence comprise entre 3 et 7 secondes. Ici, avec une distance d prise égale à deux mètres et une durée de vaporisation de 5 secondes afin de générer un flux gazeux F chargé en particules fines de NaCl, on enregistre les données, par exemple pendant 2 à 5 minutes. Une communication permet de collecter les données enregistrées au niveau du terminal qui dispose des moyens de traitement 24. Les données de mesure sont des données collectées en temps réel.

Les deux tableaux suivants indiquent des résultats expérimentaux obtenus afin de déterminer l'efficacité de séparation de l'élément filtrant EF par rapport aux particules fines des trois catégories. Cinq tests ont été réalisés :

- Un test sans le moindre élément filtrant : Aucun média filtrant 15 dans le boitier du filtre à air ;
- Avec un filtre à air (de type filtre à air constructeur) après 20000 km au compteur du véhicule 8 : l'élément filtrant EF est donc bien usé dans ce cas ;
- Avec respectivement trois filtres à air neufs A, B, C, typiquement disponibles sur le marché, ont été ensuite testés avec le même protocole que pour le filtre à air usé.

Le premier tableau concerne l'effet de séparation dans la conduite 6 des particules fines PM2,5, tandis que le second tableau concerne la séparation dans la conduite 6 des particules fines PM10. Pour chaque test T, les conditions sont du genre de celles illustrées sur les figures 2 ou 4. Pour chacun de ces tests, la première unité de détection C1 et la section d'entrée 5 ont été soumises en outre à un pic de pollution pour lequel la concentration en particules fines dépasse ici 2000 $\mu$g/m$^3$ au moins pour les particules PM2,5 et PM10 (en pratique les particules de la classe PM1 dépassent difficilement 500 $\mu$g/m$^3$ pour un tel pic).

**[Tableau 1]**

| Exemples pour PM2.5 | Extérieur ($\mu$g/m3) | | Intérieur ($\mu$g/m3) | | Efficacité | |
|---|---|---|---|---|---|---|
| Filtre à air testé | Pic fumée | Hors pic | Pic fumée | Hors pic | Pic fumée | Hors pic |
| Sans élément filtrant | 919,7 | 17,5 | **135,6** | 14,2 | 85,3% | 18,9% |
| Filtre usé (20000 km) | 2669,4 | 3,6 | **134,0** | 2,8 | 95,0% | 20,8% |
| Filtre A (neuf) | 1530,1 | 35,9 | 58,0 | **13,1** | 96,2% | 63,5% |
| Filtre B (neuf) | 651,0 | 7,4 | 12,9 | 2,1 | 98,0% | 71,2% |

(suite)

| Exemples pour PM2.5 | Extérieur ($\mu$g/m3) | | Intérieur ($\mu$g/m3) | | Efficacité | |
|---|---|---|---|---|---|---|
| Filtre à air testé | Pic fumée | Hors pic | Pic fumée | Hors pic | Pic fumée | Hors pic |
| Filtre C (neuf) | 2333,5 | 31,7 | 15,8 | 7,0 | 99,3% | 78,0% |

**[Tableau 2]**

| Exemples pour PM10 | Extérieur ($\mu$g/m3) | | Intérieur ($\mu$g/m3) | | Efficacité | |
|---|---|---|---|---|---|---|
| Filtre à air testé | Pic fumée | Hors pic | Pic fumée | Hors pic | Pic fumée | Hors pic |
| Sans element filtrant | 2011,0 | 26,0 | **150,9** | 15,9 | 92,5% | 38,7% |
| Filtre usé (20000 km) | 3069,5 | 7,8 | **142,4** | 4,3 | 95,4% | 45,2% |
| Filtre A (neuf) | 2349,5 | 49,9 | 62,0 | **15,5** | 97,4% | 68,9% |
| Filtre B (neuf) | 974,0 | 12,6 | 13,3 | 2,2 | 98,6% | 82,2% |
| Filtre C (neuf) | 3033,1 | 48,1 | 16,7 | 7,5 | 99,5% | 84,3% |

Chaque test T permet ainsi de montrer la baisse significative d'efficacité de séparation en cas de pic de pollution, pour un élément filtrant EF ayant dépassé le seuil de 15000 km d'utilisation, le kilométrage effectif étant ici de 20000 km depuis l'installation de l'élément filtrant dont les résultats sont reportés ci-dessus. Pour la séparation de particules fines PM10, la concentration dans l'habitacle HV monte à 142,4 ng/m$^3$, ce qui est extrêmement proche de la situation sans aucun élément filtrant. De la même façon, pour la séparation de particules fines PM2,5, la concentration dans l'habitacle HV monte à 134,0 ng/m$^3$, ce qui est extrêmement proche de la situation sans aucun élément filtrant.

Par ailleurs, ce type de test T peut aussi avoir un intérêt pour montrer les mérites d'un filtre neuf d'un premier type par rapport à un autre filtre neuf de constitution différente. Ainsi, dans les tableaux ci-dessus, le filtre « A » testé (dont la marque ne sera pas mentionnée, le but n'étant pas ici de dénigrer des produits du marché) présente des qualités de filtration plutôt médiocres en laissant la concentration de particules fines monter dans l'habitacle HV à des niveaux très proches de la situation sans aucun élément filtrant, dans un contexte « hors pic » avec des niveaux d'exposition relativement peu élevés en particules à l'extérieur du véhicule.

Dans les résultats expérimentaux présentés ci-dessus, un flux de particules modélisant un flux de particules sales a été généré (de façon similaire à ce qui serait généré via le pot d'échappement d'un véhicule tiers) en regard de l'entrée 5 d'air habitacle du véhicule 8 dont on analyse le filtre à air 1, puis différentes mesures de concentrations de particules fines ont été faites au niveau du flux généré F aussi bien en amont de l'élément filtrant EF que dans l'habitacle HV et ce avec différents éléments filtrants et à deux intervalles de temps. En effet, la situation avec pic de fumée va correspondre à une mesure à un premier temps, par exemple temps =0 correspondant à l'arrivée massive de particules fines au niveau de la section d'entrée 5 (pic de fumée) et à une autre mesure dans un second temps, par exemple temps =0 + 2 minutes (correspondant à la mesure hors pic de fumée) pour déterminer. Ceci permet de déterminer de façon plus complète le comportement de l'élément filtrant EF, et de mieux déterminer le taux d'efficacité de séparation, qui diffère entre le premier temps de mesure et le deuxième temps de mesure.

En référence à présent à la figure 3, on comprend que l'élément filtrant EF peut être du type amovible dans un boîtier ou une portion de canalisation de la conduite d'aération 6. Le média filtrant 15 se présente par exemple sous la forme d'une couche de média filtrant, en étant plié, typiquement à intervalles régulier, pour former un média filtrant plissé. Ainsi, il existe une pluralité de lignes de pliage parallèles entre elles, afin d'accroître la surface du média filtrant 15 exposée au flux d'air à filtrer. Des sous-couches de nature différente peuvent optionnellement composer la couche de média filtrant 15, selon le besoin en filtration. Le plus préférentiellement, le média filtrant 15 est sous la forme d'une bande de papier ou matériau similaire (déchirable) pliée en accordéon. Dans des modes de réalisation, le média filtrant 15 est du type soumis à un traitement thermique, de sorte qu'il conserve le plissage en raison d'un effet de durcissement.

Dans des variantes, le média 15 peut être multicouches et/ou présenter un mode de pliage différent. Le média filtrant 15 peut être fibreux, à base de coton, cellulose, de fibres synthétiques par exemple ou d'un mélange de fibres. Dans des options, le média filtrant 15 se compose à la fois d'un papier filtre et d'une couche de non-tissé de protection pour le filtrage grossier (par exemple pour une application en milieu très poussiéreux).

Le flux F' filtré est ainsi un flux épuré mais qui peut encore contenir des particules, et cela d'autant plus lorsque son état s'est dégradé. Dans certaines options, un coefficient de pondération peut être appliqué pour la détermination d'un état « à changer » ou « performant ». Par exemple il peut exister une zone d'incertitude reflétée par une plage de coefficients de performance proches du seuil de référence pour passer le test T.

Dans ce cas, l'unité 24 peut aussi comporter un module de caractérisation de l'élément filtrant qui est monté dans le véhicule 8, qui stocke au moins une donnée d'utilisation représentative d'une date d'installation de l'élément filtrant EF dans le véhicule et/ou d'un kilométrage parcouru par le véhicule 8 depuis la date d'installation de l'élément filtrant EF. Par utilisation de la ou les données de collecte (au moins l'une d'entre elles), on peut déterminer automatiquement un coefficient de pondération qui, en cas d'incertitude liée à la proximité du taux de performance de séparation avec le seuil de référence, va être appliqué pour obtenir un coefficient de performance modifié. Ce coefficient de pondération peut être par exemple fixé à 0,98 et multiplié au coefficient de performance obtenu, lorsque l'une des données d'utilisation reflète que l'élément filtrant n'a pas été changé depuis plus de 2 ou 3 ans (ce qui est calculé éventuellement en comparant la date du test et la date d'installation de l'élément filtrant EF). Un tel coefficient peut aussi venir réduire directement par soustraction le taux d'efficacité de séparation estimé via le test T. La même disposition ou une disposition similaire est applicable pour le cas où le kilométrage parcouru par le véhicule 8 depuis la date d'installation de l'élément filtrant EF dépasse un seuil qui peut être reconnu comme indicatif d'un besoin de changement (par exemple si ce kilométrage excède 15000 ou 20000 km par exemple).

Que ce genre de pondération soit utilisé ou non, on peut dans tous les cas prévoir une étape de comparaison avec un ou plusieurs seuils, par un module comparateur CP de l'unité électronique de traitement 24, afin de déterminer un état de l'élément filtrant EF parmi au moins deux états de caractérisation possibles dont un premier état représente un état de conservation de l'élément filtrant, permettant d'éviter un démontage de l'élément filtrant, et un deuxième état représentant un besoin de changer l'élément filtrant EF.

Dans certaines options, il peut être prévu de réaliser un test complémentaire au moment de l'installation de l'élément filtrant EF ou peu après ce moment, avant que le véhicule 8 ait commencé à rouler mais après avoir commencé à utiliser ce nouvel élément filtrant EF pour filtrer un flux gazeux provenant de l'extérieur du véhicule 8 et simulant une pollution par utilisation de particules solides issues du diffuseur 3. Ceci permet d'obtenir des résultats à l'état neuf de l'élément filtrant EF. Le cas échéant lors d'un test ultérieur pour cet élément filtrant, on pourra compléter les résultats du test en comparant le taux d'efficacité obtenu pour ce test ultérieur avec le taux d'efficacité initial. Dans certains cas, ceci permet de détecter un défaut d'un élément filtrant neuf (par exemple lorsqu'il ne semble pas dépasser de plus d'une différence seuil l'efficacité observée pour le cas sans le moindre élément filtrant), que le défaut d'efficacité soit rencontré en situation de pic de pollution/pic de fumée (avec des concentrations d'exposition côté extérieur supérieures à 1500 ou 2000 1000 $\mu$g/m$^3$) ou en situation hors pic.

Le procédé peut être mis en œuvre dans un outil portatif (dont les éléments sont co-localisés dans un même contenant, par exemple une mallette), avec la possibilité de générer un résultat de diagnostic/test sur place dans ou au plus près du véhicule. Ceci peut permettre un gain de temps pour immobiliser et tester le véhicule le plus rapidement possible.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

**1.** Procédé de contrôle d'un filtre à air (1) dans un véhicule (8), le filtre (1) incluant un élément filtrant (EF) fixé de façon amovible dans une conduite d'aération (6) du véhicule débouchant dans un habitacle intérieur (HV) du véhicule, le procédé utilisant un diffuseur de type générateur d'aérosol (A) permettant de générer un flux gazeux (F) chargé en particules, ledit flux comprenant des particules fines de différentes tailles choisies parmi au moins deux des trois classes de particules fines PM1, PM2,5 et PM10, une information de référence représentative d'une concentration des particules de chaque classe respective dans ce flux gazeux (F) étant obtenue avant un test de l'élément filtrant (EF) et/ou après la réalisation d'un ensemble de mesures à l'extérieur du véhicule (8) dans une région de diffusion dudit flux (F) ;

le procédé incluant ledit test (T) qui comprend les étapes consistant essentiellement à :

- configurer (52) le diffuseur (2) pour générer ledit flux gazeux (F) ;
- faire circuler le flux gazeux (F) généré par le diffuseur (2) dans ladite conduite d'aération (6), depuis l'extérieur du véhicule (8) en faisant entrer ce flux dans une section d'entrée (5) de la conduite d'aération (6) jusqu'à au moins une section de sortie (7) communiquant avec ou débouchant dans l'habitacle intérieur (HV), l'élément filtrant (EF) étant interposé entre la section d'entrée (5) et la section de sortie (7) de façon à filtrer le flux gazeux ;
- collecter au moins une fraction (fd) dudit flux gazeux (F) ayant traversé l'élément filtrant (EF) ; et
- réaliser par des moyens de détection optique (C2) des mesures en temps réel (53) de concentrations de particules en fonction de leur répartition en taille, dans ladite fraction (fd) collectée ;

- déterminer (54) par des moyens de traitement (24) en liaison avec les moyens de détection optique, pour chacune des au moins deux classes choisies, un taux d'efficacité de séparation représentatif d'un effet barrière de l'élément filtrant (EF) vis-à-vis des particules pour au moins deux classes choisies parmi les trois classes de particules fines PM1, PM2,5 et PM10, par utilisation desdites mesures en temps réel et des informations de référence.

2. Procédé de contrôle selon la revendication 1, dans lequel il est déterminé par les moyens de traitement (24) que l'élément filtrant (EF) a passé avec succès le test, en fonction d'une comparaison entre le taux d'efficacité de séparation et un taux d'efficacité de séparation de référence.

3. Procédé de contrôle selon la revendication 2, dans lequel ledit flux gazeux (F) est généré de façon à former, pendant une sous-période durant le test, un pic de concentration du type représentatif d'un pic de fumées, ledit flux (F) ayant pour ce pic de concentration une concentration qui dépasse 1000 ng/m$^3$, de préférence sans dépasser 2000 ou 3000 $\mu$g/m$^3$.

4. Procédé de contrôle selon la revendication 3, dans lequel un changement de l'élément filtrant (EF) est préconisé s'il est déterminé que le taux d'efficacité de séparation du filtre vis-à-vis d'au moins l'une des classes de particules fines est inférieur à une valeur seuil de référence correspondant à environ 95 % pour une mesure prise pendant la génération du pic de concentration.

5. Procédé de contrôle selon l'une quelconque des revendications précédentes, comprenant une réitération du test avec les mêmes moyens de détection optique (C2) pour tester un autre élément filtrant ayant remplacé l'élément filtrant dans ladite conduite d'aération (6), lorsque le résultat de la détermination du taux d'efficacité correspond à une valeur inférieure à un seuil de référence pour passer le test (T).

6. Procédé de contrôle selon l'une quelconque des précédentes, dans lequel le test relatif à un élément filtrant (EF) est réalisé pour chacune des trois classes de particules fines PM1, PM2,5 et PM10.

7. Procédé de contrôle selon la revendication 6, dans lequel le flux gazeux (F) est généré à partir d'une solution liquide ou gazeuse saline dépourvue de composés organiques.

8. Procédé de contrôle selon la revendication 7, dans lequel le flux gazeux (F) est généré à partir d'une solution liquide saline permettant de générer des particules de chlorure de sodium.

9. Procédé de contrôle selon la revendication 6, 7 ou 8, dans lequel le taux d'efficacité de séparation de l'élément filtrant (EF) est déterminé, pour chacune des trois classes, en fonction :

   - d'un nombre de particules en aval de l'élément filtrant (EF) détecté dans un volume d'une chambre de détection (18) appartenant à une unité de détection (C2) de particules fines ; et
   - d'un nombre de particules en amont de l'élément filtrant (EF) détecté dans un volume d'une chambre de détection appartenant à une autre unité identique de détection (C1) de particules fines.

10. Procédé de contrôle selon la revendication 6, 7 ou 8, dans lequel le taux d'efficacité de séparation de l'élément filtrant (EF) est déterminé, pour chacune des trois classes, en fonction :

   - d'un nombre de particules en amont de l'élément filtrant (EF) détecté dans un volume d'une chambre de détection appartenant à une unité de détection (C2) de particules fines ; et
   - d'un nombre de particules en aval de l'élément filtrant (EF) détecté ensuite dans un volume d'une chambre de détection (18) appartenant à la même unité de détection (C2).

11. Procédé de contrôle selon l'une quelconque des revendications 1 à 9, comprenant une phase de préparation au cours de laquelle on fournit :

   - une première unité de détection (C1) configurée pour détecter des particules fines réparties dans les trois classes PM1, PM 2,5 et PM10 ;
   - lesdits moyens de détection optique sous la forme d'une deuxième unité de détection (C2) configurée pour détecter des particules fines réparties dans les trois classes PM1, PM 2,5 et PM10, et qui est de préférence identique à la première unité de détection (C1) ;

la phase de préparation comprenant en outre la mise en place de la première unité de détection (C1) en position adjacente à la section d'entrée (5) de la conduite d'aération (6), de préférence sur ou à l'aplomb d'un parebrise à l'avant du véhicule (8) équipé de l'élément filtrant (EF), et la mise en place de la deuxième unité de détection (C2) dans l'habitacle intérieur (HV).

12. Procédé de contrôle selon la revendication 11, dans lequel la phase de préparation comprend en outre, dans une étape d'étalonnage (50) précédant la mise en place de l'une au moins des unités de détection (C1, C2):

- la réalisation d'expériences utilisant la première unité de détection (C1) et la deuxième unité de détection (C2), agencées en parallèle pendant une durée déterminée, en soumettant les unités de détection (C1, C2) à des expériences de détection de particules fines réparties dans les trois classes PM1, PM 2,5 et PM10 et diffusées simultanément par des moyens de diffusion de particules communs ;
- une estimation d'un facteur correctif, sur la base de mesures fournies par les unités de détection (C1, C2) soumises aux expériences, afin de permettre à ces unités de détection (C1, C2) de fournir des résultats de mesures identiques avec une marge d'erreur inférieure à un seuil.

13. Procédé de contrôle selon la revendication 11 ou 12, dans lequel postérieurement à la phase de préparation, ledit flux gazeux (F) est généré par le diffuseur (3) à une distance prédéterminée de la première unité de détection (C1), de préférence comprise entre 1 m et 2,5 m, pendant une phase de vaporisation dont la durée est prédéterminée, de préférence comprise entre 3 et 7 secondes,

et dans lequel chacune des unités de détection (C1, C2) enregistre et/ou transmet, pendant une durée de test supérieur ou égal à 30 secondes, de préférence comprise entre 90 secondes et 300 ou 400 secondes, des données représentatives de concentrations de particules pour permettre leur exploitation par les moyens de traitement (24),
ce grâce à quoi il est permis, pour chacune desdites classes, de déterminer par les moyens de traitement (24) un taux d'efficacité de séparation des particules fines par l'élément filtrant (EF), après une comparaison entre les données issues de la première unité de détection (C1) et les données issues de la deuxième unité de détection (C2).

14. Equipement (30) de test pour tester un élément filtrant (EF) présent dans un véhicule (8) pour la mise en œuvre du procédé de contrôle selon l'une quelconque des revendications 1 à 9 ou 11 à 13, l'équipement (30) de test comprenant :

- un diffuseur (3) de type générateur d'aérosol (A), permettant de générer à l'extérieur du véhicule (8) un flux gazeux (F) chargé en particules fines de différentes tailles choisies parmi au moins deux des trois classes de particules fines PM1, PM2,5 et PM10,
- des moyens de traitement (24), incluant un module logiciel comparateur (CP) configuré pour utiliser un ou plusieurs seuils et déterminer si un taux d'efficacité de séparation de particules fines de l'élément filtrant (EF) dépasse un seuil de recommandation de changement de l'élément filtrant (EF), ce qui permet au module logiciel comparateur (CP) de déterminer un état de l'élément filtrant (EF) parmi au moins deux états de caractérisation possibles dont un premier état représente un état de conservation de l'élément filtrant (EF), permettant d'éviter un démontage de l'élément filtrant, et un deuxième état représentant un besoin de changer l'élément filtrant (EF),
- une première unité de détection (C1) pourvue de moyens de détection optique pour quantifier et caractériser des particules fines selon les trois classes, la première unité de détection (C1) disposant de moyens de transmission et/ou stockage d'une information de référence représentative d'une concentration des particules de chaque classe respective dans le flux gazeux (F) tel que généré à l'extérieur du véhicule (8), ladite information de référence étant obtenue par la première unité de détection (C1) avant un test de l'élément filtrant (EF) et/ou après la réalisation d'un ensemble de mesures à l'extérieur du véhicule (8) dans une région de diffusion dudit flux gazeux du diffuseur (3) située près d'une section d'entrée (5) d'une conduite d'aération (6) du véhicule débouchant dans un habitacle intérieur (HV) du véhicule; et
- une deuxième unité de détection (C2) pourvue des mêmes moyens de détection optique que la première unité de détection (C1) pour quantifier et caractériser des particules fines selon les trois classes, la deuxième unité de détection (C2) étant entièrement distincte de la première unité de détection (C1) pour pouvoir être disposée dans l'habitacle intérieur (HV) du véhicule (8) ;

ce grâce à quoi, lorsque le flux gazeux (F) généré par le diffuseur (2) est mis à circuler dans la conduite d'aération (6), depuis l'extérieur du véhicule (8) via la section d'entrée (5) jusqu'à au moins une section de sortie (7) communiquant avec ou débouchant dans l'habitacle intérieur (HV), la deuxième unité de détection (C2) est apte et configurée pour collecter au moins une fraction (fd) dudit flux gazeux (F) ayant traversé l'élément filtrant (EF), dans un état monté dans l'habitacle intérieur (HV) et réaliser par ses moyens de détection optique des mesures en temps réel (53) de concentrations de particules en fonction de leur répartition en taille, dans ladite fraction (fd) collectée, sachant que des moyens de liaison inclus dans l'équipement (30) permettent une communication entre les moyens de traitement (24) et chacune parmi les unités de détection (C1, C2) afin de recevoir au niveau des moyens de traitement (24) des informations représentatives des mesures en temps réel et des informations de référence.

15. Equipement de test selon la revendication 14, comprenant un chariot (10) mobile pourvu d'un premier support de maintien pour maintenir la première unité de détection (C1) dans une première zone de réception et d'un deuxième support de maintien pour maintenir le diffuseur (3) dans une deuxième zone de réception, le chariot (10) disposant de moyens permettant d'écarter et maintenir une buse (2) ou embout de diffusion du diffuseur (3) à une distance de référence de la section d'entrée (5) de la conduite d'aération (6), en maintenant une distance prédéterminée (d) entre lesdites zones de réception respectives du premier support et du deuxième support, et dans lequel le diffuseur (3) comprend un réservoir contenant une solution saline dépourvue de composés organiques.

**Patentansprüche**

1. Verfahren zur Überwachung eines Luftfilters (1) in einem Fahrzeug (8), wobei das Filter (1) ein filtrierendes Element (EF) aufweist, das auflösbare Weise in einer Lüftungsleitung (6) des Fahrzeugs angebracht ist, die in einen Innenraum (HV) des Fahrzeugs mündet, wobei das Verfahren einen Zerstäuber des Typs Aerosolgenerator (A) verwendet, der erlaubt, einen mit Partikel beladenen Gasstrom (F) zu erzeugen, wobei der Strom Feinpartikel unterschiedlicher Größe, ausgewählt aus mindestens zwei der drei Feinpartikelklassen PM1, PM2,5 und PM10, aufweist, wobei eine Referenzinformation, die eine jeweilige Partikelkonzentration jeder Klasse in diesem Gasstrom (F) repräsentiert, vor einem Test des filtrierenden Elements (EF) und/oder nach der Durchführung mehrerer Messungen außerhalb des Fahrzeugs (8) in einer Zerstäubungszone des Stroms (F) gewonnen wird; wobei das Verfahren den Test (T) umfasst, der die folgenden Schritte aufweist, die im Wesentlichen bestehen aus:

   - Konfigurieren (52) des Zerstäubers (2), um den Gasstrom (F) zu erzeugen;
   - Strömen lassen des von dem Zerstäuber (2) erzeugten Gasstroms (F) in der Lüftungsleitung (6) von außerhalb des Fahrzeugs (8) durch Bewirken eines Eintretens dieses Stroms in einen Eingangsabschnitt (5) der Lüftungsleitung (6) bis zu mindestens einem Ausgangsabschnitt (7), der mit dem Innenraum (HV) in Verbindung steht oder in diesen mündet, wobei das filtrierende Element (EF) zwischen dem Eingangsabschnitt (5) und dem Ausgangsabschnitt (7) angeordnet ist, um so den Gasstrom zu filtern;
   - Sammeln mindestens einer Fraktion (fd) des durch das filtrierende Element (EF) hindurchgegangenen Gasstroms (F); und
   - Durchführen von Echtzeit-Messungen (53) von Partikelkonzentrationen als Funktion ihrer Größenverteilung in der gesammelten Fraktion (fd) mit Hilfe von optischen Detektionseinrichtungen (C2);
   - Bestimmen (54) eines Trennwirkungsgrads, der eine Sperrwirkung des filtrierenden Elements (EF) gegenüber Partikeln für mindestens zwei aus den drei Feinpartikelklassen PM1, PM2,5 und PM10 ausgewählten Klassen repräsentiert, mit Hilfe von Verarbeitungseinrichtungen (24) in Verbindung mit den optischen Detektionseinrichtungen für jede der mindestens zwei ausgewählten Klassen durch Verwendung der Echtzeit-Messungen und Referenzinformationen.

2. Verfahren zur Überwachung nach Anspruch 1, in welchem von den Verarbeitungseinrichtungen (24) als Funktion eines Vergleichs zwischen dem Trennwirkungsgrad und einem Referenz-Trennwirkungsgrad bestimmt wird, dass das filtrierende Element (EF) den Test mit Erfolg bestanden hat.

3. Verfahren zur Überwachung nach Anspruch 2, in welchem der Gasstrom (F) derart erzeugt wird, um während eines Zeitabschnitts während des Tests einen Konzentrationsspitzenwert des Typs zu erzeugen, der einen Rauchgas-Spitzenwert repräsentiert, wobei der Strom (F) für diesen Konzentrationsspitzenwert eine Konzentration hat, die $1000\mu g/m^3$ überschreitet, bevorzugt ohne 2000 oder $3000\mu g/m^3$ zu überschreiten.

4. Verfahren zur Überwachung nach Anspruch 3, in welchem ein Wechseln des filtrierenden Elements (EF) empfohlen wird, wenn bestimmt worden ist, dass der Trennwirkungsgrad des Filters gegenüber mindestens einer der Feinpartikelklassen unterhalb eines Referenzschwellenwerts ist, der ungefähr 95% für einen während der Erzeugung des Konzentrationsspitzenwerts erfassten Messwert entspricht.

5. Verfahren zur Überwachung nach einem der vorstehenden Ansprüche, aufweisend eine Wiederholung des Tests mit den gleichen optischen Detektionseinrichtungen (C2), um ein anderes filtrierendes Element, das das filtrierende Element in der Lüftungsleitung (6) ersetzt hat, zu testen, wenn das Ergebnis der Bestimmung des Trennwirkungsgrads einem Wert entspricht, der unterhalb eines Referenzschwellenwerts zum Bestehen des Tests (T) ist.

6. Verfahren zur Überwachung nach einem der vorstehenden Ansprüche, in welchem der Test, der ein filtrierendes Element (EF) betrifft, für jede der drei Feinpartikelklassen PM1, PM2,5 und PM10 durchgeführt wird.

7. Verfahren zur Überwachung nach Anspruch 6, in welchem der Gasstrom (F) aus einer flüssigen oder gasförmigen Salzlösung, die frei von organischen Bestandteilen ist, erzeugt wird.

8. Verfahren zur Überwachung nach Anspruch 7, in welchem der Gasstrom (F) aus einer flüssigen Salzlösung erzeugt wird, die erlaubt, Natriumchlorid-Partikel zu erzeugen.

9. Verfahren zur Überwachung nach Anspruch 6, 7 oder 8, in welchem der Trennwirkungsgrad des filtrierenden Elements (EF) für jede der drei Klassen bestimmt wird als Funktion von:

   - einer Anzahl von Partikeln stromabwärts des filtrierenden Elements (EF), die in einem Volumen einer Detektionskammer (18) detektiert wird, die zu einer Feinpartikel-Detektionseinheit (C2) gehört; und
   - einer Anzahl von Partikeln stromaufwärts des filtrierenden Elements (EF), die in einem Volumen einer Detektionskammer detektiert wird, die zu einer anderen identischen Feinpartikel-Detektionseinheit (C1) gehört.

10. Verfahren zur Überwachung nach Anspruch 6, 7 oder 8, in welchem der Trennwirkungsgrad des filtrierenden Elements (EF) für jede der drei Klassen bestimmt wird als Funktion von:

   - einer Anzahl von Partikeln stromaufwärts des filtrierenden Elements (EF), die in einem Volumen einer Detektionskammer detektiert wird, die zu einer Feinpartikel-Detektionseinheit (C2) gehört; und
   - einer Anzahl von Partikeln stromabwärts des filtrierenden Elements (EF), die anschließend in einem Volumen einer Detektionskammer (18) detektiert wird, die zu der gleichen Detektionseinheit (C2) gehört.

11. Verfahren zur Überwachung nach einem der Ansprüche 1 bis 9, aufweisend eine Vorbereitungsphase, in deren Verlauf bereitgestellt wird:

   - eine erste Detektionseinheit (C1), die konfiguriert ist, um in den drei Klassen PM1, PM2,5 und PM10 verteilte Feinpartikel zu detektieren;
   - die optischen Detektionseinrichtungen in Form einer zweiten Detektionseinheit (C2), die konfiguriert ist, um in den drei Klassen PM1, PM2,5 und PM10 verteilte Feinpartikel zu detektieren, und die vorzugsweise mit der ersten Detektionseinheit (C1) identisch ist;

   wobei die Vorbereitungsphase ferner aufweist: das Anordnen der ersten Detektionseinheit (C1) an einer Position angrenzend an den Eingangsabschnitt (5) der Lüftungsleitung (6) vorzugsweise an oder lotrecht zu einer Windschutzscheibe vor dem mit dem filtrierenden Element (EF) ausgestatteten Fahrzeug (8) und das Anordnen der zweiten Detektionseinheit (C2) im Innenraum (HV).

12. Verfahren zur Überwachung nach Anspruch 11, in welchem die Vorbereitungsphase in einem Eichschritt (50), der dem Anordnen mindestens einer der Detektionseinheiten (C1, C2) vorausgeht, ferner aufweist:

   - die Durchführung von Versuchen unter Verwendung der ersten Detektionseinheit (C1) und der zweiten Detektionseinheit (C2), die während einer bestimmten Dauer parallel angeordnet sind, indem die Detektionseinheiten (C1, C2) Versuchen zur Detektion von Feinpartikeln unterworfen werden, die in den drei Klassen PM1, PM2,5 und PM10 verteilt sind und von gemeinsamen Partikelzerstäubungseinrichtungen gleichzeitig zerstäubt werden;
   - eine Schätzung eines Korrekturfaktors auf Basis von Messwerten, die von den Detektionseinheiten (C1, C2), die den Versuchen unterworfen werden, geliefert werden, um diesen Detektionseinheiten (C1, C2) zu erlauben, identische Messergebnisse mit einer Fehlerspanne, die unterhalb eines Schwellenwerts ist, zu liefern.

**13.** Verfahren zur Überwachung nach Anspruch 11 oder 12, in welchem nach der Vorbereitungsphase der Gasstrom (F) von dem Zerstäuber (3) in einem vorgegebenen Abstand von der ersten Detektionseinheit (C1), der vorzugsweise zwischen 1m und 2,5m beträgt, während einer Verdampfungsphase, deren Dauer vorgegeben ist, vorzugsweise zwischen 3 und 7 Sekunden beträgt, erzeugt wird,

und in welchem jede der Detektionseinheiten (C1, C2) Daten, die Partikelkonzentrationen repräsentieren, während einer Testdauer von mehr als oder gleich 30 Sekunden, vorzugsweise zwischen 90 Sekunden und 300 oder 400 Sekunden, registriert und/oder überträgt, um ihre Auswertung durch die Verarbeitungseinrichtungen (24) zu erlauben,

dank dessen es erlaubt ist, mit Hilfe der Verarbeitungseinrichtungen (24) für jede der Klassen einen Feinpartikel-Trennwirkungsgrad des filtrierenden Elements (EF) nach einem Vergleich zwischen den von der ersten Detektionseinheit (C1) ausgegebenen Daten und den von der zweiten Detektionseinheit (C2) ausgegebenen Daten zu bestimmen.

**14.** Testvorrichtung (30) zum Testen eines in einem Fahrzeug (8) vorhandenen filtrierenden Elements (EF) für die Durchführung eines Verfahrens zur Überwachung nach einem der Ansprüche 1 bis 9 oder 11 bis 13, wobei die Testvorrichtung (30) aufweist:

- einen Zerstäuber (3) des Typs Aerosolgenerator (A), der erlaubt, außerhalb des Fahrzeugs (8) einen Gasstrom (F) zu erzeugen, der mit Feinpartikeln unterschiedlicher Größe beladen ist, die aus mindestens zwei der drei Feinpartikelklassen PM1, PM2,5 und PM10 ausgewählt sind,

- Verarbeitungseinrichtungen (24) mit einem Logikkomparator-Modul (CP), das konfiguriert ist, um einen oder mehrere Schwellenwerte zu verwenden und zu bestimmen, ob ein Feinpartikel-Trennwirkungsgrad des filtrierenden Elements (EF) einen Schwellenwert, der eine Empfehlung zum Wechseln des filtrierenden Elements (EF) repräsentiert, überschreitet, was dem Logikkomparator-Modul (CP) erlaubt, einen Zustand des filtrierenden Elements (EF) unter mindestens zwei möglichen Charakterisierungszuständen zu bestimmen, von denen ein erster Zustand einen Beibehaltungszustand des filtrierenden Elements (EF), der ein Ausbauen des filtrierenden Elements (EF) zu vermeiden erlaubt, repräsentiert und ein zweiter Zustand eine Notwendigkeit eines Wechseln des filtrierenden Elements (EF) repräsentiert,

- eine erste Detektionseinheit (C1), die mit optischen Detektionseinrichtungen versehen ist, um Feinpartikel gemäß den drei Klassen zu quantifizieren und charakterisieren, wobei die erste Detektionseinheit (C1) über Einrichtungen zum Übertragen und/oder Speichern einer Referenzinformation verfügt, die eine jeweilige Konzentration der Partikel jeder Klasse in dem Gasstrom (F), wie außerhalb des Fahrzeugs (8) erzeugt, repräsentiert, wobei die Referenzinformation von der ersten Detektionseinheit (C1) vor einem Test des filtrierenden Elements (EF) und/oder nach der Durchführung mehrerer Messungen außerhalb des Fahrzeugs (8) in einer Zerstäubungszone des Gasstroms (F) des Zerstäubers (3) nahe an einem Eingangsabschnitt (5) einer Lüftungsleitung (6) des Fahrzeugs, die in einen Innenraum (HV) des Fahrzeugs mündet, gewonnen wird; und

- eine zweite Detektionseinheit (C2), die mit den gleichen optischen Detektionseinrichtungen wie die erste Detektionseinheit (C1) versehen ist, um Feinpartikel gemäß den drei Klassen zu quantifizieren und charakterisieren, wobei die zweite Detektionseinheit (C2) von der ersten Detektionseinheit (C1) völlig verschieden ist, um in dem Innenraum (HV) des Fahrzeugs (8) angeordnet zu werden;

so dass, wenn der von dem Zerstäuber (2) erzeugte Gasstrom (F) in der Lüftungsleitung (6) von außerhalb des Fahrzeugs (8) über den Eingangsabschnitt (5) bis zu mindestens einem Ausgangsabschnitt (7), der mit dem Innenraum (HV) in Verbindung steht oder in diesen mündet, in Strömung versetzt wird, die zweite Detektionseinheit (C2) fähig und konfiguriert ist, um in einem in dem Innenraum (HV) angebrachten Zustand mindestens eine Fraktion (fd) des Gasstroms (F) nach dessen Durchgang durch das filtrierende Element (EF) zu sammeln und mit Hilfe ihrer optischen Detektionseinrichtungen Echtzeit-Messungen (53) von Partikelkonzentrationen als Funktion ihrer Größenverteilung in der gesammelten Fraktion (fd) durchzuführen,

wissend dass in der Vorrichtung (30) enthaltene Verbindungseinrichtungen eine Kommunikation zwischen den Verarbeitungseinrichtungen (24) und jeder der Detektionseinheiten (C1, C2) erlauben, um an den Verarbeitungseinrichtungen (24) Informationen, die Echtzeit-Messungen repräsentieren, und Referenzinformationen zu empfangen.

**15.** Testvorrichtung nach Anspruch 14, aufweisend einen mobilen Wagen (10), der mit einem ersten Halteträger zum Halten der ersten Detektionseinheit (C1) in einer ersten Empfangszone und mit einem zweiten Halteträger zum Halten des Zerstäubers (3) in einer zweiten Empfangszone versehen ist, wobei der Wagen (10) über Einrichtungen verfügt, die erlauben, eine Düse (2) oder ein Zerstäubungsmundstück des Zerstäubers (3) in einem Referenzabstand von dem Eingangsabschnitt (5) der Lüftungsleitung (6) zu beabstanden und zu halten, unter Aufrechterhaltung eines vorgegebenen Abstands (d) zwischen den jeweiligen Empfangszonen des ersten Trägers und des zweiten Trägers, und in welcher der Zerstäuber (3) einen Behälter aufweist, der eine Salzlösung enthält, die frei von organischen Bestandteilen ist.

**Claims**

1. Method for controlling an air filter (1) in a vehicle (8), the filter (1) including a filter element (EF) removably fastened in an air duct (6) of the vehicle opening out into an interior passenger compartment (HV) of the vehicle, the method using a diffuser of the aerosol generator type (A) for generating a gas flow (F) loaded with particles, said flow comprising fine particles of various sizes selected from at least two of the three fine particle classes PM1, PM2.5 and PM10, reference information representative of a concentration of particles of each respective class in this gas flow (F) being obtained before a test of the filter element (EF) and/or after performing a set of measurements outside of the vehicle (8) in a diffusion region of said flow (F);
the method including said test (T) that comprises the steps essentially of:

   - configuring (52) the diffuser (2) to generate said gas flow (F);
   - circulating the gas flow (F) generated by the diffuser (2) in said air duct (6), from outside of the vehicle (8) by entering this flow into an inlet section (5) of the air duct (6) up to at least an outlet section (7) communicating with or opening out into the interior passenger compartment (HV), the filter element (EF) being interposed between the inlet section (5) and the outlet section (7) so as to filter the gas flow;
   - collecting at least one fraction (fd) of said gas flow (F) having passed through the filter element (EF); and
   - performing by optical detection means (C2) real-time measurements (53) of concentrations of particles depending on their size distribution, in said fraction (fd) collected;
   - determining (54) by processing means (24) in connection with the optical detection means, for each of the at least two classes selected, a separation efficiency ratio representative of a barrier effect of the filter element (EF) in relation to particles for at least two classes selected from the three fine particle classes PM1, PM2.5 and PM10, by using said real-time measurements and reference information.

2. Control method according to claim 1, wherein it is determined by the processing means (24) that the filter element (EF) has successfully passed the test, depending on a comparison between the separation efficiency ratio and a reference separation efficiency ratio.

3. Control method according to claim 2, wherein said gas flow (F) is generated so as to form, during a sub-period during the test, a concentration peak of the type representative of a smoke peak, said flow (F) having for this concentration peak a concentration that exceeds 1,000 $\mu$g/m$^3$, preferably without exceeding 2,000 or 3,000 $\mu$g/m$^3$.

4. Control method according to claim 3, wherein a change of the filter element (EF) is recommended if it is determined that the separation efficiency ratio of the filter in relation to at least one of the fine particle classes is below a reference threshold value corresponding to approximately 95% for a measurement taken during the generation of the concentration peak.

5. Control method according to any one of the preceding claims, comprising a reiteration of the test with the same optical detection means (C2) to test another filter element having replaced the filter element in said air duct (6), when the result of the determination of the efficiency ratio corresponds to a value below a reference threshold in order to pass the test (T).

6. Control method according to any one of the preceding claims, wherein the test relating to a filter element (EF) is performed for each of the three fine particle classes PM1, PM2.5 and PM10.

7. Control method according to claim 6, wherein the gas flow (F) is generated from a saline gas or liquid solution devoid of organic compounds.

8. Control method according to claim 7, wherein the gas flow (F) is generated from a saline liquid solution for generating sodium chloride particles.

9. Control method according to claim 6, 7 or 8, wherein the separation efficiency ratio of the filter element (EF) is determined, for each of the three classes, depending on:

- a number of particles downstream of the filter element (EF) detected in a volume of a detection chamber (18) belonging to a fine particle detection unit (C2); and
- a number of particles upstream of the filter element (EF) detected in a volume of a detection chamber belonging to another identical fine particle detection unit (C1).

10. Control method according to claim 6, 7 or 8, wherein the separation efficiency ratio of the filter element (EF) is determined, for each of the three classes, depending on:

- a number of particles downstream of the filter element (EF) detected in a volume of a detection chamber belonging to a fine particle detection unit (C2); and
- a number of particles upstream of the filter element (EF) subsequently detected in a volume of a detection chamber (18) belonging to the same fine particle detection unit (C2).

11. Control method according to any one of claims 1 to 9, comprising a preparation phase during which it is provided:

- a first detection unit (C1) configured to detect fine particles distributed in the three classes PM1, PM 2.5 and PM10;
- said optical detection means in the form of a second detection unit (C2) configured to detect fine particles distributed in the three classes PM1, PM 2.5 and PM10, and that is preferably identical to the first detection unit (C1);

the preparation phase further comprising installing the first detection unit (C1) in a position adjacent to the inlet section (5) of the air duct (6), preferably on or in line with a windscreen at the front of the vehicle (8) equipped with the filter element (EF), and installing the second detection unit (C2) in the interior passenger compartment (HV).

12. Control method according to claim 11, wherein the preparation phase further comprises, in a calibration step (50) preceding the installation of one at least of the detection units (C1, C2):

- performing experiments using the first detection unit (C1) and the second detection unit (C2), arranged in parallel during a predetermined period, by subjecting the detection units (C1, C2) to experiments for detecting fine particles distributed in the three classes PM1, PM 2.5 and PM10 and simultaneously diffused by common particle diffusion means;
- estimating a corrective factor, based on measurements provided by the detection units (C1, C2) subjected to experiments, in order to make it possible for these detection units (C1, C2) to provide identical measurement results with a margin of error below a threshold.

13. Control method according to claim 11 or 12, wherein subsequent to the preparation phase, said gas flow (F) is generated by the diffuser (3) at a predetermined distance from the first detection unit (C1), preferably between 1 m and 2.5 m, during a vaporisation phase the duration of which is predetermined, preferably between 3 and 7 seconds,

and wherein each of the detection units (C1, C2) records and/or transmits, during a test duration greater than or equal to 30 seconds, preferably between 90 seconds and 300 or 400 seconds, data representative of concentrations of particles for their exploitation by the processing means (24),
whereby it is permitted, for each of said classes, to determine by the processing means (24) a fine particle separation efficiency ratio by the filter element (EF), after a comparison between the data from the first detection unit (C1) and the data from the second detection unit (C2).

14. Test equipment (30) for testing a filter element (EF) present in a vehicle (8) for implementing the control method according to any one of claims 1 to 9 or 11 to 13, the test equipment (30) comprising:

- a diffuser (3) of the aerosol generator type (A), for generating outside of the vehicle (8) a gas flow (F) loaded with fine particles of various sizes selected from at least two of the three fine particle classes PM1, PM2.5 and PM10,
- processing means (24), including a comparator software module (CP) configured to use one or more thresholds and determine if a fine particle separation efficiency ratio of the filter element (EF) exceeds a recommendation threshold for changing the filter element (EF), which makes it possible for the comparator software module (CP) to determine a condition of the filter element (EF) from at least two possible characterisation conditions a first condition of which represents a conservation condition of the filter element (EF), making it possible to prevent the filter element from being dismantled, and a second condition representing a need to change the filter element (EF),

- a first detection unit (C1) provided with optical detection means for quantifying and characterising fine particles according to the three classes, the first detection unit (C1) having means for transmitting and/or storing reference information representative of a concentration of particles of each respective class in the gas flow (F) such as generated outside of the vehicle (8), said reference information being obtained by the first detection unit (C1) before a test of the filter element (EF) and/or after performing a set of measurements outside of the vehicle (8) in a diffusion region of said gas flow of the diffuser (3) located close to an inlet section (5) of an air duct (6) of the vehicle opening out into an interior passenger compartment (HV) of the vehicle; and

- a second detection unit (C2) provided with the same optical detection means as the first detection unit (C1) for quantifying and characterising fine particles according to the three classes, the second detection unit (C2) being entirely different from the first detection unit (C1) in order to be able to be disposed in the interior passenger compartment (HV) of the vehicle (8);

whereby, when the gas flow (F) generated by the diffuser (2) is circulated in the air duct (6), from outside of the vehicle (8) via the inlet section (5) up to at least one outlet section (7) communicating with or opening out into the interior passenger compartment (HV), the second detection unit (C2) is capable of and configured to collect at least one fraction (fd) of said gas flow (F) having passed through the filter element (EF), in a mounted condition in the interior passenger compartment (HV) and perform by its optical detection means real-time measurements (53) of concentrations of particles depending on their size distribution, in said fraction (fd) collected, bearing in mind that connection means included in the equipment (30) make it possible to communicate between the processing means (24) and each of the detection units (C1, C2) in order to receive at the processing means (24) information representative of the real-time measurements and of the reference information.

15. Test equipment according to claim 14, comprising a movable carriage (10) provided with a first holding bracket for holding the first detection unit (C1) in a first receiving area and with a second holding bracket for holding the diffuser (3) in a second receiving area, the carriage (10) having means for moving away and retaining a diffusion nozzle (2) or end piece of the diffuser (3) at a reference distance from the inlet section (5) of the air duct (6), by maintaining a predetermined distance (d) between said respective receiving areas of the first bracket and of the second bracket, and wherein the diffuser (3) comprises a tank containing a saline solution devoid of organic compounds.

FIG. 1

FIG. 2

FIG. 3

50

⇒

C1

C2

51

⇒

C1  5  8

C2

T

52

⇒

d  C1  5

3  F

C2

53

54

55

⇒

60

**FIG. 4**

9  16  C2  7

19

18

F

14

S2  12

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2769265
- US 2004065204 A1
- WO 2018211044 A
- WO 2018211049 A